# EUROPEAN PATENT APPLICATION

(11) **EP 4 662 997 A1**
(43) Date of publication of application: **17.12.2025**
(21) Application number: 24778058.8
(22) Date of filing: 27.03.2024
(51) Int. Cl.: A01D 34/00, G06F 3/041, B60L 50/60

(54) **ELECTRIC MOWING VEHICLE AND ALL-TERRAIN VEHICLE**

(30) Priority: 29.03.2023 CN 202320660145 U; 29.03.2023 CN 202320684891 U; 29.03.2023 CN 202310322908; 10.05.2023 CN 202310524211; 11.05.2023 CN 202310532904
(71) Applicant: Nanjing Chervon Industry Co., Ltd., Nanjing, Jiangsu 211106 (CN)
(72) Inventor: WANG, Shoubin, Nanjing, Jiangsu 211106 (CN); DU, Jian, Nanjing, Jiangsu 211106 (CN); WANG, Lei, Nanjing, Jiangsu 211106 (CN); CHEN, Xu, Nanjing, Jiangsu 211106 (CN); ZHAO, Yueyue, Nanjing, Jiangsu 211106 (CN); NIE, Zhusheng, Nanjing, Jiangsu 211106 (CN); WANG, Zhen, Nanjing, Jiangsu 211106 (CN); ZHAO, Wensheng, Nanjing, Jiangsu 211106 (CN)
(74) Representative: Sun, Yiming
(86) International application number: PCT/CN2024/084052
(87) International publication number: WO 2024/199272

(57) **Abstract**

Provided is an electric mowing vehicle (100). The electric mowing vehicle (100) includes a frame (91); a mowing assembly (10) connected to the frame (91); a traveling assembly (93) connected to the frame (91) and including at least traveling wheels (931); a traveling motor configured to at least drive the traveling wheels (931) to rotate; a power supply device (96) configured to supply power to at least the traveling motor; and a human-computer interaction device (53) configured to display vehicle information or receive the information inputted by a user. The human-computer interaction device (53) further includes a display panel (531) with a touch function. The display panel (531) is capable of displaying at least a first display page (531a) or a second display page (531b). The display panel (531) is configured to be capable of switching between the first display page (531a) and the second display page (531b) when receiving a fingerprint touch switching instruction from the user.

## Description

This application claims priority to Chinese Patent Application No. 202320660145.9 filed with the China National Intellectual Property Administration (CNIPA) on Mar. 29, 2023, Chinese Patent Application No. 202320684891.1 filed with the CNIPA on Mar. 29, 2023, Chinese Patent Application No. 202310322908.3 filed with the CNIPA on Mar. 29, 2023, Chinese Patent Application No. 202310524211.4 filed with the CNIPAon May 10, 2023, and Chinese Patent Application No. 202310532904.8 filed with the CNIPA on May 11, 2023, the disclosures of which are incorporated herein by reference in their entireties.

### TECHNICAL FIELD

The present application relates to a garden tool, for example, an electric mowing vehicle.

### BACKGROUND

As a garden tool, a riding mowing device is widely used in the field of trimming lawns and vegetation. The riding mowing device is more labor-saving and more efficient in mowing than a push mower. The riding mower in the related art has a display screen for displaying only the vehicle information. The function of the display screen is too simplistic, leading to a poor user experience.

This part provides background information related to the present application, which is not necessarily the existing art.

### SUMMARY

An object of the present application is to solve or at least alleviate some or all of the preceding problems. Therefore, an object of the present application is to provide an electric mowing vehicle with a good user experience. The electric mowing vehicle has a touchable display screen, the display screen has multiple display pages, and the user switches between the multiple display pages through the touch screen.

To achieve the preceding object, the present application adopts the technical solutions below. An electric mowing vehicle includes a frame; a mowing assembly connected to the frame; a traveling assembly connected to the frame and including at least traveling wheels; a traveling motor configured to at least drive the traveling wheels to rotate; a power supply device configured to supply power to at least the traveling motor; and a human-computer interaction device configured to display vehicle information or receive the information inputted by a user. The human-computer interaction device further includes a display panel with a touch function. The display panel is capable of displaying at least a first display page or a second display page. The display panel is configured to be capable of switching between the first display page and the second display page when receiving a fingerprint touch switching instruction from the user.

In some examples, the first display page is configured to display the current state information of the electric mowing vehicle.

In some examples, the current state information includes the state of the power supply device, an illumination system, a Bluetooth indication, an operation indication, the rotational speed of a mowing element, and the rotational speed of the traveling wheels; and the state of the power supply device, the rotational speed of the mowing element, and the rotational speed of the traveling wheels are configured to be displayed in the middle region of the first display page.

In some examples, the second display page is configured to display the cumulative information of the electric mowing vehicle.

In some examples, the cumulative information includes at least one of the total working duration, the total mowing area, and the remaining battery life.

In some examples, the display panel is further capable of displaying a third display page, where the third display page is configured to display the detailed information of the power supply device.

In some examples, the power supply device includes multiple battery packs, and the detailed information includes the states of the multiple battery packs, such as the states of charge or total capacities of the multiple battery packs.

In some examples, the display panel is configured to be capable of switching between the first display page and the third display page when receiving the fingerprint touch switching instruction from the user.

In some examples, the human-computer interaction device further has an information change setting function, and the display page is operable by the user to switch to an information change setting mode.

In some examples, the display panel displays a corresponding function in the information change mode, acquires an operation instruction from the user for the corresponding function, and performs a corresponding information change operation according to the operation instruction.

In some examples, the touch function of the display panel has an on state and an off state.

In some examples, when the touch function of the display panel is in the on state, the display panel displays a corresponding function, acquires an operation instruction from the user for the corresponding function, and performs a corresponding operation according to the operation instruction.

In some examples, the operation instruction includes sliding, clicking, or key input.

In some examples, the touch function of the display panel is configured to switch between the on state and the off state by acquiring an operation instruction from the user on the display panel.

In some examples, the display panel is a dot matrix screen.

An all-terrain vehicle (ATV) includes a frame; a seat disposed on the frame and including at least a driver's seat; an operation and control device configured to control the operation of the ATV; a traveling assembly connected to the frame and including at least traveling wheels; a traveling motor configured to at least drive the traveling wheels to rotate; a power supply device configured to supply power to at least the traveling motor; and a human-computer interaction device configured to display vehicle information or receive the information inputted by a user. The human-computer interaction device further includes a display panel with a touch function. The display panel is capable of displaying at least a first display page or a second display page. The display panel is configured to be capable of switching between the first display page and the second display page when receiving a fingerprint touch switching instruction from the user.

In some examples, the ATV is configured to be capable of attaching a variety of working attachments, and the variety of working attachments include at least a mowing assembly, a snow removal assembly, or a trailer hitch.

### BRIEF DESCRIPTION OF DRAWINGS

FIG. 1 is a perspective view of an electric mowing vehicle as a specific example.
FIG. 2 is a perspective view of an ATV as another specific example.
FIG. 3 is a perspective view of a human-computer interaction device in FIG. 1.
FIG. 4 is a schematic view of a first display page displayed on a display panel of the human-computer interaction device in FIG. 3.
FIG. 5 is a schematic view of touch switching between multiple display pages.
FIG. 6 is a schematic view of a display page for information change settings.
FIG. 7 is a physical view of a manned mower according to an example of the present application.
FIG. 8 is a bottom view of a manned mower according to an example of the present application.
FIG. 9 is a side view of a manned mower according to an example of the present application.
FIG. 10 is a schematic view of a human visual range according to an example of the present application.
FIG. 11 is a physical view of another manned mower according to an example of the present application.
FIG. 12 is a physical view of an ATV according to an example of the present application.
FIG. 13 is a structural view of a manned mower according to a specific example of the present application.
FIG. 14 is a schematic view of an operating device rotating about a first axis in a first direction according to a specific example of the present application.
FIG. 15 is a schematic view of an operating device rotating about a second axis in a second direction according to a specific example of the present application.
FIG. 16 is a schematic view of an operating device when an eddy-current sensor and an induction assembly are in an adjacent state according to a specific example of the present application.
FIG. 17 is a schematic view of three relative angular positions between an eddy-current sensor and an induction assembly that are in a first state of being far apart in an operating device according to a specific example of the present application.
FIG. 18 is a structural view of an operating device when an eddy-current sensor and an induction assembly are in an adjacent state from one perspective according to a specific example of the present application.
FIG. 19 is a structural view of an operating device when an eddy-current sensor and an induction assembly are in an adjacent state from another perspective according to a specific example of the present application.
FIG. 20 is a structural view of an eddy-current sensor and an induction assembly according to a specific example of the present application.
FIG. 21 is another structural view of an eddy-current sensor and an induction assembly according to a specific example of the present application.
FIG. 22 is a schematic view of an operating device of a manned mower used at an electronic steering wheel according to a specific example of the present application.
FIG. 23 is a schematic view illustrating that a manned mower is a lawn tractor according to a specific example of the present application.
FIG. 24 is a schematic view of an ATV according to a specific example of the present application.
FIG. 25 is a schematic view illustrating that a manned mower is a stand-on mower according to a specific example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

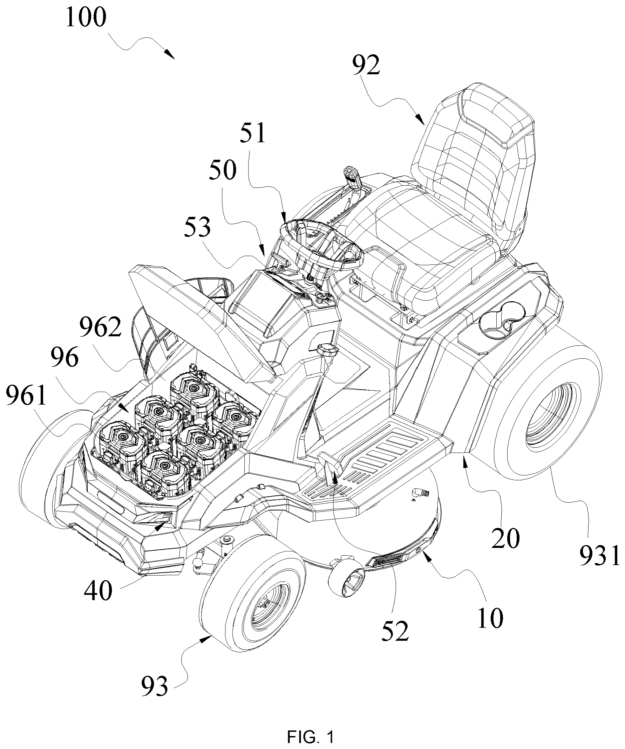

As shown in FIG. 1, the present application discloses an electric mowing vehicle 100 for a user to sit or stand on and operate to trim a lawn and other vegetation. In this specification, directions such as the front, rear, left, right, up, and down are described as directions shown in FIG. 1. Optionally, when the user sits on the electric mowing vehicle 100 on the ground, it is defined that a direction which the user faces is the front, a direction which the user faces away from is the rear, a direction on the left-hand side of the user is the left, a direction on the right-hand side of the user is the right, a direction facing the ground is the down, and a direction facing away from the ground is the up.

As shown in FIG. 1, the electric mowing vehicle 100 includes a cutting assembly 10, a frame 91, a seat 92, a housing system 20, a traveling assembly 93, a power supply device 96, an illumination system 40, and an operating assembly 50. The seat 92 is mounted on the frame 91 and is used for the user to sit on. The frame 91 carries the seat 92. The frame 91 and the housing system 20 form the body of the electric mowing vehicle 100, and the body is used for mounting the cutting assembly 10, the seat 92, the power supply assembly 96, and the illumination system 40. The traveling assembly 93 is configured to support the body. The electric mowing vehicle 100 supplies energy to the cutting assembly 10, the traveling assembly 93, the illumination system 40, and the like through the power supply device 96 so that the electric mowing vehicle 100 can be used as a power tool. The electric mowing vehicle 100 is more environmentally friendly and more energy-efficient than a fuel-based mowing vehicle. In some examples, the electric mowing vehicle 100 includes a grass collecting device. The grass collecting device is configured to collect grass clippings cut off by the cutting assembly 10. The grass collecting device includes a grass collecting basket assembly detachably mounted behind the seat 92.

Optionally, the cutting assembly 10 is a power output member configured to output power to implement the function of the electric mowing vehicle 100. The cutting assembly 10 is disposed below the frame 91. In this example, the cutting assembly 10 includes a cutting deck, mowing elements, and mowing motors. The mowing elements are configured to cut vegetation while rotating at a high speed. For example, the mowing elements are blades for cutting grass on the lawn. The cutting deck surrounds a mowing space which is open downward and at least partially accommodates the mowing elements. The mowing elements are at least partially accommodated in the cutting deck, and the mowing motors are configured to drive the mowing elements to rotate. In some examples, two mowing elements and two mowing motors may be provided. Correspondingly, the two mowing motors drive the two mowing elements, respectively. In some examples, three mowing elements and three mowing motors may be provided. Correspondingly, the three mowing motors drive the three mowing elements, respectively. Of course, the cutting assembly 10 may be detached from the electric mowing vehicle 100. In some examples, other working attachments may be connected to the electric mowing vehicle 100. For example, a snow shoveling assembly may be connected to the electric mowing vehicle 100. In this case, strictly speaking, the electric mowing vehicle 100 is no longer just a riding mowing device, but a riding snow thrower. The electric mowing vehicle 100 may perform different tasks according to different working attachments connected thereto.

The traveling assembly 93 is configured to support the frame 91 so that the electric mowing vehicle 100 can travel on the ground. In this example, the traveling assembly 93 includes traveling wheels 931 supported by the frame 91 and a traveling motor configured to drive the traveling wheels 931.

The housing system 20 includes at least a left cover, a right cover, and a front cover. The front cover is disposed at the front of the electric mowing vehicle 100. The power supply device 96 is configured to supply electric power to at least the cutting assembly 10, the traveling assembly 93, and the like. The power supply device 96 includes at least one battery pack 961 configured to store electrical energy and a battery holder housing 962 for mounting the battery pack. One or multiple battery packs and battery holders may be provided. Of course, the battery pack may also be disposed at other positions of the electric mowing vehicle 100, for example, at the rear or above the traveling wheels. In some examples, the battery pack is detachably removed from the battery holder housing, thereby being charged or supplying power to other electrical devices. In some examples, the total energy of the power supply device 96 is greater than or equal to 0.5 kW·h and less than or equal to 6 kW·h. In some examples, the total energy of the power supply device 96 is greater than or equal to 1 kW·h and less than or equal to 5 kW·h. The total energy of the preceding power supply device may be the sum of the energy of all the battery packs. In some examples, the power supply device 96 includes at least a first battery pack and a second battery pack. The energy of the first battery pack or the second battery pack is greater than or equal to 0.1 kW·h and less than or equal to 4 kW·h.

The operating assembly 50 includes a pedal assembly 52. The pedal assembly 52 includes an accelerator assembly and a brake assembly. The operating assembly 50 further includes a steering assembly configured to control the traveling direction of the electric mowing vehicle 100. The steering assembly may be configured to be a steering wheel 51 as shown in FIG. 1. Of course, the steering assembly may also be implemented in other forms.

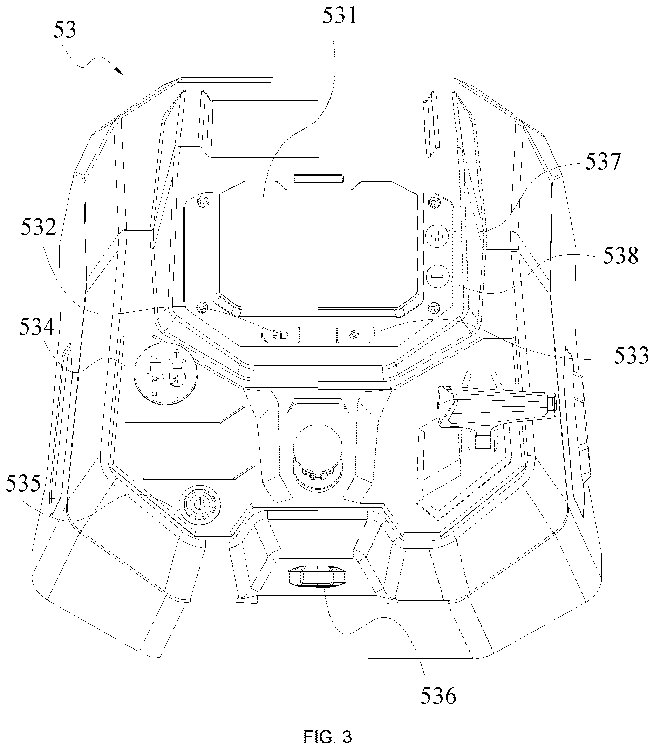

The operating assembly 50 further includes a human-computer interaction device 53 configured to display information about the electric mowing vehicle 100 or receive the information inputted by the user. Optionally, as shown in FIG. 3, the human-computer interaction device 53 includes a display panel 531 configured to display the information about the electric mowing vehicle 100, and the display panel 531 can display multiple display pages. Each display page depicts a different type of information or a different arrangement of information. Optionally, the display panel 531 can display multiple different display pages to the operator. In some examples, the display panel 531 is configured to be a dot matrix screen.

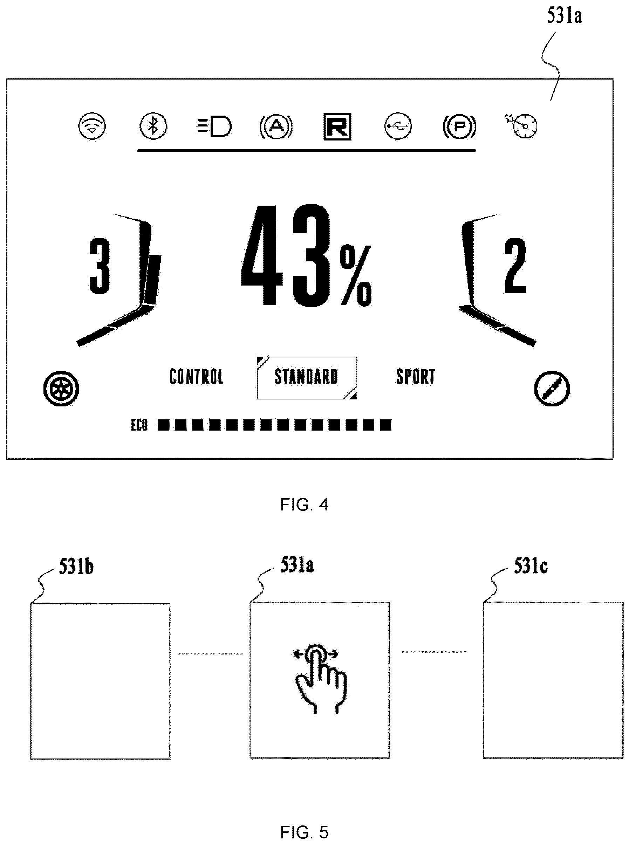

In some examples, as shown in FIG. 4, a first display page 531a is configured to display the current state information of the electric mowing vehicle 100, including the state of the power supply device 96 (for example, the state of charge or charging intensity), the illumination system 40, a Bluetooth indication, an operation indicator (for example, displaying driving or parking), the rotational speed of the mowing elements, and the rotational speed of the traveling wheels. The state of charge of the power supply device 96 may be displayed as a number (for example, the state of charge or remaining time expressed in percentages) or as a graphic (for example, multiple lit bars and unlit bars). To make it easier for the operator to view important information, the state of charge of the power supply device 96, the rotational speed of the mowing elements, and the rotational speed information of the traveling wheels are displayed in the middle region of the first display page 531a and occupy most of the first display page 531a. Other pieces of state information of the electric mowing vehicle 100 are arranged in sequence on the upper part of the first display page 531a.

In some examples, the display panel 531 may also display a second display page that may display the cumulative information of the electric mowing vehicle 100 to the operator. The cumulative information includes, but is not limited to, the total working duration, the total mowing area, the remaining battery life, and the like. In some examples, the display panel 531 may also display a third display page for displaying the detailed information of the power supply device 96 of the electric mowing vehicle 100 to the operator. For example, the power supply device 96 includes multiple battery packs that may be the same or different. Optionally, the third display page displays the states of the multiple battery packs, such as states of charge and total capacities.

The user can switch between the multiple display pages displayed on the display panel 531. Optionally, the human-computer interaction device 53 further includes the display panel with a touch function, the display panel can display at least the first display page or the second display page, and the display panel is configured to be capable of switching between the first display page and the second display page when receiving a fingerprint touch switching instruction from the user. For example, as shown in FIG. 5, when the display panel 531 of the electric mowing vehicle 100 displays the first display page 531a, the user slides the finger to the left on the display panel 531, and the display page on the display panel 531 switches from the first display page 531a to the second display page 531b. When the user slides the finger to the right on the display panel 531, the display page on the display panel 531 switches from the first display page 531a to a third display page 531c. Of course, the user may also switch between display pages by sliding up and down or clicking. In some examples, physical buttons or composite buttons may also be used for switching between display pages. In some examples, the user may switch between display pages by inputting voice commands. In some examples, the user may switch between display pages on the display panel 531 by connecting to a remote device via the Internet of things.

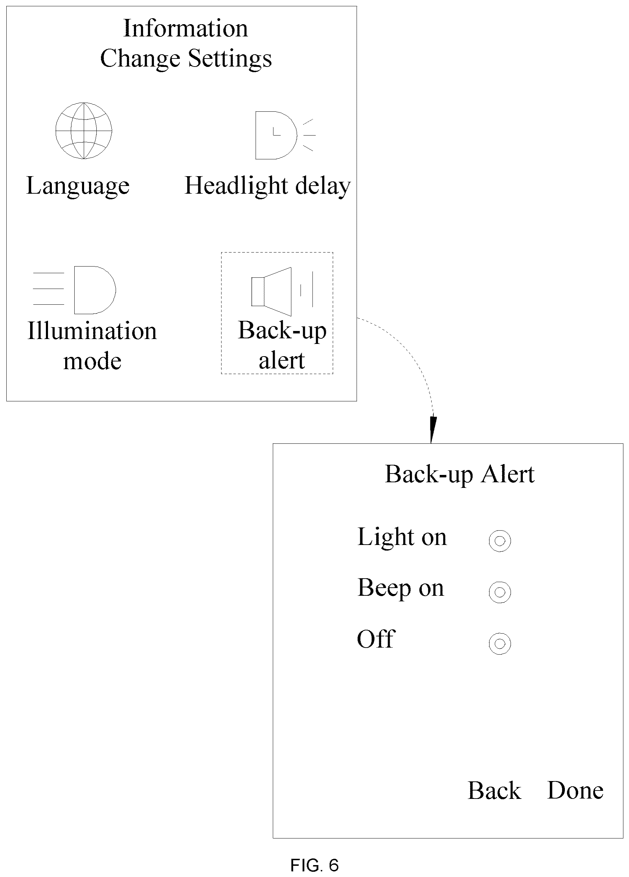

The human-computer interaction device 53 further has an information change setting mode. In some examples, the user may control the display panel 531 to enter the information change setting mode through buttons. In some examples, the user may touch a corresponding setting icon on the display panel 531 to enter the information change setting mode. Optionally, the display panel 531 displays a corresponding function in the information change setting mode, acquires an operation instruction from the user for the corresponding function, and performs a corresponding information change setting according to the operation instruction. As shown in FIG. 6, after the display panel 531 enters the information change setting mode, the user may set the language, the headlight delay time, the illumination mode, the back-up alert, and the like. For example, when the user wants to set the back-up alert mode, the user just needs to click the corresponding function on the display page to enter the next-level display page. On the next-level display page, the user may select parameters as needed. Of course, the user may select parameters by clicking or sliding or may fill in the required parameters. In some examples, the operator may also reset the power-on password in the information change setting mode. In some examples, the human-computer interaction device may be connected to a remote device via the Internet of things, and the operator sets the vehicle information of the electric mowing vehicle 100 via the remote device.

The human-computer interaction device 53 further has an animation demonstration mode. In some examples, the human-computer interaction device 53 has a startup animation demonstration mode for displaying the functions of the electric mowing vehicle to the operator or for reminding the user of precautions during use. In some examples, the human-computer interaction device 53 further has a warning demonstration mode for warning or reminding the user of improper behaviors or incomplete actions during normal use. For example, when the user performs a parking operation, the display panel 531 automatically displays a parking animation, and if the user has not completed the parking operation, the display panel 531 continuously reminds the user to continue the parking operation through animation playback. For example, when the electric mowing vehicle 100 is charged, the display panel 53 enters a charging interface and can display information such as the current battery level or the remaining charging time of the power supply device and other related information in real time. For example, when the electric mowing device is in a power-on state, the display panel enters a power-on page, on which the user is reminded to insert a key or operate the remote device connected to the electric mowing device. Of course, the power-on page further displays the state of charge of the power supply device so that the user can learn the current energy storage state of the power supply device. For example, when the electric mowing vehicle 100 fails, the display panel displays a fault information page.

The human-computer interaction device 53 further includes the display panel with a touch function, and the touch function of the display panel has an on state and an off state. In some examples, the display panel is configured to be operable by the user to switch the touch function between the on state and the off state. Optionally, when the touch function of the display panel is in the off state, the display panel is configured to display the information about the electric mowing vehicle in real time. When the touch function of the display panel is in the on state, the display panel displays a corresponding function, acquires an operation instruction from the user for the corresponding function, and performs a corresponding operation according to the operation instruction. The operation instruction includes, but is not limited to, sliding, clicking, or key input. The corresponding operation includes, but is not limited to, display page switching, information change settings, and the like. When the touch function is in the on state, the user can input instructions by touching the screen with the finger and implement functions such as information setting and screen switching, which is similar to the touch screen of a mobile phone. When the touch function is in the off state, the display panel does not respond to the user's fingerprint touch instruction. When the touch function is in the off state, the display panel can still display the basic state information of the electric mowing vehicle, for example, displaying the first display page, instead of being in a black screen state. Of course, the user may control the display page displayed on the display panel by pressing buttons. In some examples, the touch function of the display panel is configured to switch between the on state and the off state by pressing buttons. In some examples, the touch function of the display panel is configured to switch between the on state and the off state by acquiring an operation instruction from the user on the display panel.

In this manner, when the display panel has a touch response abnormality or a touch abnormality caused by a harsh environment, the user may selectively switch the energy storage function from the on state to the off state and restore the touch function later according to the situation.

The human-computer interaction device further includes a display screen configured to automatically adjust display brightness based on ambient brightness. The preceding display screen may be a display panel. Optionally, the human-computer interaction device includes a brightness detection unit and a controller connected to the display screen, and the controller acquires an output signal of the brightness sensor to control the display brightness of the display screen. In this manner, the brightness is adjusted according to the external environment, the display brightness becomes a little weaker in a dark environment, and the display brightness becomes a little stronger or is even set to the maximum brightness in a strong light environment. By automatically adjusting the display brightness, the user can have a better experience, thereby avoiding the following: the display brightness is too strong in a dark environment, causing eye discomfort, and the display brightness is too weak in a strong light environment, causing unclear vision. In some examples, the automatic brightness adjustment function of the display screen has an on state and an off state. When the automatic brightness adjustment function of the display screen is in the on state, the display brightness of the display screen can be automatically adjusted based on the ambient brightness. When the automatic brightness adjustment function of the display screen is in the off state, the display brightness of the display screen no longer changes with the ambient brightness, but is fixed. In this manner, the user may select a constant display brightness based on personal preference. In some other examples, the human-computer interaction device further includes a button for adjusting the display brightness of the display screen. When the automatic brightness adjustment function of the display screen is in the off state, the button is used by the user to adjust the display brightness of the display screen. In some examples, the human-computer interaction device further includes a button for adjusting the display brightness of the display screen. When the automatic brightness adjustment function of the display screen is in the on state, the button is used by the user to adjust the display brightness of the display screen. Regardless of whether the automatic brightness adjustment function is in the on state or not, the button can effectively adjust the display brightness of the display screen. In some examples, the display screen can display a brightness adjustment function, acquire the operation instruction from the user for the brightness adjustment function, and perform the corresponding operation according to the preceding operation instruction.

In the preceding example, the display screen is touched or operated by buttons to switch between pages so that the user can quickly switch to the desired screen to view or set information.

With continued reference to FIG. 3, buttons are arranged around the display panel 531 for the user to operate to control the operation of the electric mowing vehicle. Optionally, a first button 532 and a second button 533 are provided below the display panel 531. The first button 532 is used for the user to operate to control the illumination function of the electric mowing vehicle 100. The second button 533 is used for the user to operate to control the display panel to enter the information change setting mode. In some examples, a power take-off (PTO) switch 534 is further disposed near the display panel 531 and has a first position and a second position, where when the PTO switch 534 is at the first position, the mowing elements rotate; and when the PTO switch 534 is at the second position, the mowing elements stop. A start button 535 is further disposed near the display panel 531. When the start button 535 is triggered, the electric mowing vehicle 100 enters a standby state. In this case, the user may operate other operating members to make the electric mowing vehicle 100 enter a traveling state or a mowing state. In some examples, a keyhole 536 is further disposed near the display panel 531. In some examples, an increase button 537 and a decrease button 538 are further disposed near the display panel 531. Some of the functions implemented by the preceding buttons can also be implemented by displaying the corresponding functions on the display panel.

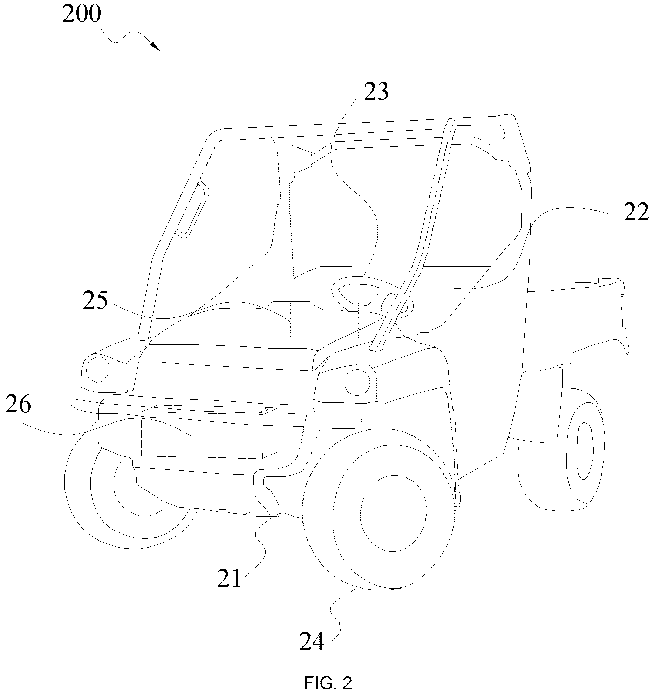

The preceding human-computer interaction device may also be applied to the ATV. FIG. 2 shows an ATV 200 as a specific example, specifically a utility vehicle (UTV). The preceding ATV further includes a four-wheel ATV. The traditional ATV generally provides the instrument information display function through the instrument panel. However, as people's demand for intelligent entertainment functions such as in-vehicle multimedia and navigation becomes increasingly strong, the ATV begins to develop in the direction of intelligence.

Optionally, the ATV 200 includes a frame 21; a seat 22 disposed on the frame 21 and including at least a driver's seat; an operation and control device 23 configured to control the operation of the ATV 200; a traveling assembly 24 connected to the frame 21 and including at least traveling wheels (not shown in the figure); a traveling motor (not shown in the figure) configured to at least drive the traveling wheels to rotate; and a power supply device 26 configured to supply power to at least the traveling motor. The ATV 200 further includes a human-computer interaction device 25 configured to display vehicle information or receive the information inputted by the user. In some examples, the human-computer interaction device 25 further includes a display panel with a touch function, the touch function of the display panel has an on state and an off state, and the display panel is configured to be operable by the user to switch between the on state and the off state. The display panel can display a corresponding function, acquire an operation instruction from the user for the corresponding function, and perform a corresponding operation according to the operation instruction.

In some examples, the human-computer interaction device further includes the display panel with a touch function, the display panel can display at least the first display page or the second display page, and the display panel is configured to be capable of switching between the first display page and the second display page when receiving a fingerprint touch switching instruction from the user.

In some examples, the human-computer interaction device further includes a display screen that can automatically adjust the display brightness based on the ambient brightness.

In some examples, the ATV is configured to be capable of attaching a variety of working attachments, and the variety of working attachments include at least a mowing assembly, a snow removal assembly, or a trailer hitch.

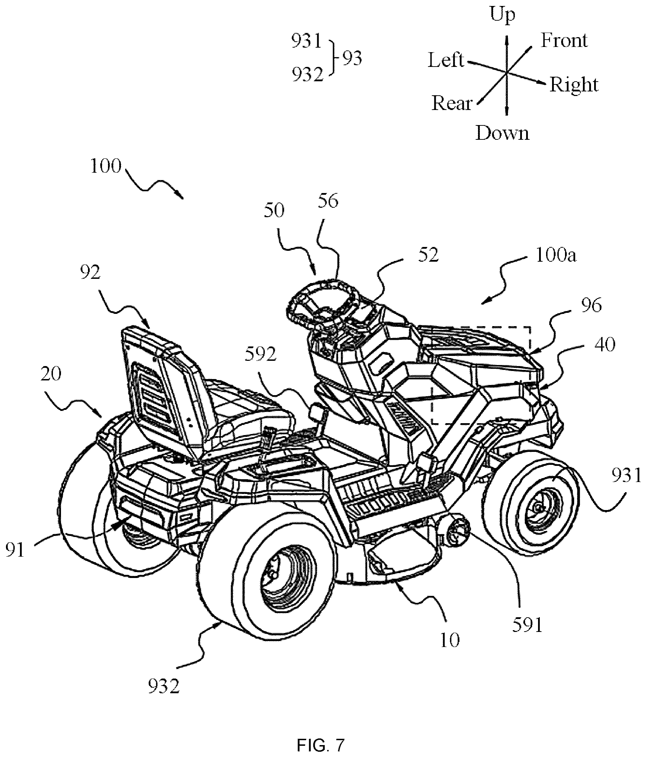

FIG. 7 is a physical view of a manned mower according to an example of the present application. Referring to FIG. 7, in this example, the directions of front, rear, left, right, up, and down are described as the directions shown in FIG. 7. Optionally, when the user is carried on a manned mower 100 located on the ground, it is defined that a direction which the user faces is the front, a direction which the user faces away from is the rear, a direction on the left-hand side of the user is the left, a direction on the right-hand side of the user is the right, a direction facing the ground is the down, and a direction facing away from the ground is the up.

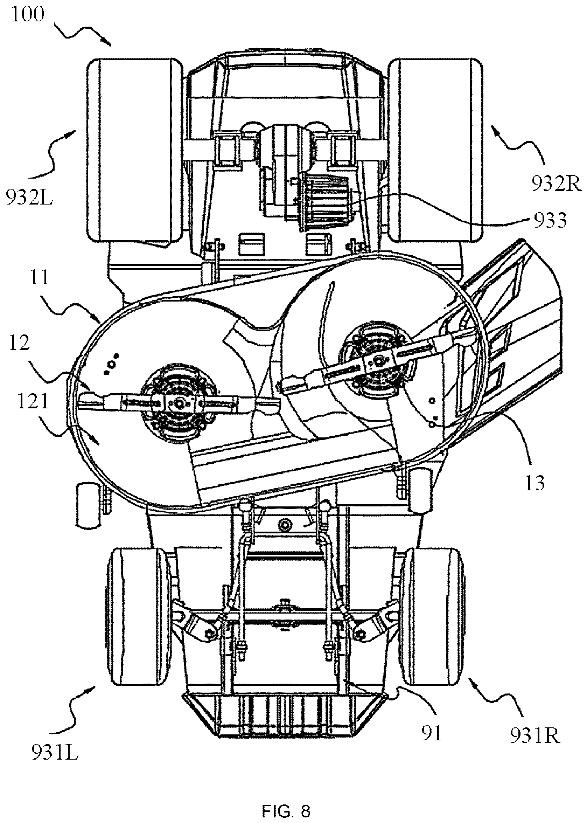

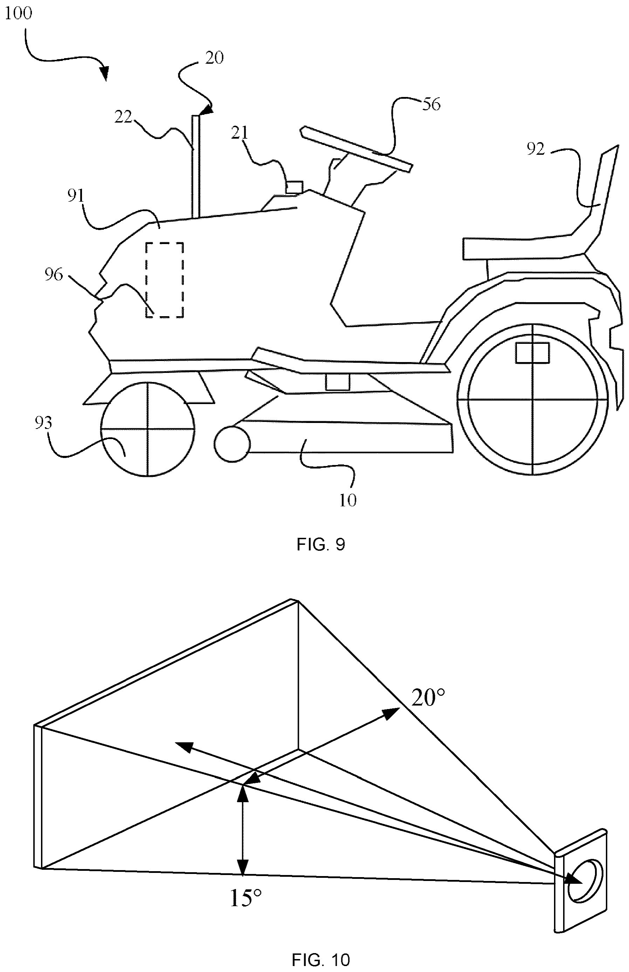

FIG. 8 is a bottom view of a manned mower according to an example of the present application. FIG. 9 is a side view of a manned mower according to an example of the present application. In conjunction with FIGS. 7 to 9, the manned mower 100 provided in this example includes a frame 91, a traveling assembly 93, a mowing assembly 10, an operating assembly 50, a power supply device 96, a support portion 92, a steering operating device 56, and a display assembly 20. The traveling assembly 93 includes traveling wheels for driving the manned mower to travel on the ground and a traveling motor for driving the traveling wheels. The mowing assembly 10 includes mowing elements and drive motors configured to drive the mowing elements. The operating assembly 50 is used for the user to operate to control the manned mower 100. The power supply device 96 includes at least one battery pack. The support portion 92 is configured to support the user. The steering operating assembly 56 is configured to control the steering of the manned mower 100. The display assembly 20 includes a projection device 21. The projection device 21 is configured to project the current vehicle information in front of the support portion 92.

In this example, the support portion 92 may include a seat. In some examples, the support portion may be a platform for the user to stand on. The manned mower 100 provided in this example may further include a housing system 20 and an illumination system 40. The frame 91 and the housing system 20 form a body 100a of the manned mower 100. The body 100a is used for mounting the mowing assembly 10, the support portion 92, the power supply device 96, and the illumination system 40. The traveling assembly 93 is configured to support the body 100a. The manned mower 100 supplies energy to the mowing assembly 10, the traveling assembly 93, the illumination system 40, and the like through the power supply device 96 so that the manned mower 100 can be used as a power tool. The electric manned mower 100 provided in this example is more environmentally friendly and more energy-efficient than a fuel-based manned mower. In some examples, the manned mower 100 includes a grass collecting device. The grass collecting device is configured to collect grass clippings cut off by the mowing assembly 10. The grass collecting device includes a grass collecting basket assembly detachably mounted behind the support portion 92.

Optionally, the mowing assembly 10 is a power output member configured to output power to implement the function of the manned mower 100. The mowing assembly 10 is disposed below the frame 91. In this example, the mowing assembly 10 includes mowing elements 12, drive motors 13, and a cutting deck 11. The mowing elements 12 are configured to cut vegetation while rotating at a high speed. For example, the mowing elements 12 are blades for cutting grass on the lawn. The cutting deck 11 surrounds a mowing space 121 which is open downward and used for at least partially accommodating the mowing elements 12. The mowing elements 12 are at least partially accommodated in the cutting deck 11. The drive motors 13 are configured to drive the mowing elements 12 to rotate. In some examples, two mowing elements 12 may be provided and two drive motors 13 may be provided. Correspondingly, the two drive motors 13 drive the two mowing elements 12, respectively. In some examples, three mowing elements 12 may be provided and three drive motors 13 may be provided. Correspondingly, the three drive motors 13 drive the three mowing elements 12, respectively.

Of course, the mowing assembly 10 may be detached from the manned mower 100. In some examples, other working attachments may be connected to the manned mower 100. For example, a snow shoveling assembly may be connected to the manned mower 100. In this case, the manned mower 100 is no longer just a riding mowing device, but a riding snow thrower. The riding mowing device 100 may perform different tasks according to different working attachments connected thereto.

The traveling assembly 93 is configured to support the frame 91 so that the manned mower 100 can travel on the ground. In this example, the traveling assembly 93 includes a first traveling assembly 931 and a second traveling assembly 932. The first traveling assembly 931 is a front traveling assembly, and the second traveling assembly 932 is a rear traveling assembly. The first traveling assembly 931 includes two first traveling wheels, that is, a first left traveling wheel 931L and a first right traveling wheel 931R. The second traveling assembly 932 includes two second traveling wheels, that is, a second left traveling wheel 932L and a second right traveling wheel 932R. The radius of the second traveling wheel is greater than the radius of the first traveling wheel. The traveling assembly 93 further includes a traveling motor 933 configured to drive the second traveling assembly 932.

The operating assembly 50 may include a control panel 52 and a pedal assembly. The pedal assembly includes an accelerator assembly 591 and a brake assembly 592. The steering operating assembly 56 may include a steering wheel that can be operated by the user to control the traveling direction of the manned mower 100. The control panel 52 includes multiple operating members. The multiple operating members are operable by the user to control the state of the manned mower 100. In some examples, the operating members may include switches or buttons of different shapes or sizes, a gear shifter, or the like.

In some examples, the manned mower 100 further includes the display assembly 20 configured to display the current vehicle information of the manned mower 100. Optionally, the display assembly 20 includes the projection device 21 for projecting the current vehicle information in front of the support portion 92.

The projection device 21 may acquire the current vehicle information of the manned mower 100 and project the current vehicle information in front of the support portion 92. In some examples, an imaging device 22 for reflecting projection light may be disposed in front of the support portion 92. After the projection device 21 projects the current vehicle information in front of the support portion 92, the imaging device 22 reflects projection light toward the user's eyes so that the user can acquire the current vehicle information. In some examples, the projection device 21 may be a holographic projection device. After the projection device 21 projects the current vehicle information in front of the support portion 92, the user's eyes may directly observe the projected image information.

The current vehicle information may include, but is not limited to, one or more of the real-time traveling speed, the driving gear, the parking state, the reversing state, the state of the support portion, the state of the illumination system, the state of the key, the fault information, the operating mode, the rotational speed of the mowing elements, the mowing gear, the current working area, the current working duration, the traveling path, the cumulative mowing area, the cumulative operating duration, the battery level, battery over-temperature, a low battery level alarm, the estimated working duration corresponding to remaining power, setting parameters, and a fatigue driving reminder of the manned mower 100. In some examples, the manned mower 100 has a Subscriber Identity Module (SIM) function, and the current vehicle information may further include navigation information, current weather, and future weather. In some examples, the manned mower 100 may have a Bluetooth function. When the manned mower 100 is connected to Bluetooth, for example, when the manned mower 100 is connected to a communication device such as a mobile phone via Bluetooth, the current vehicle information may further include an incoming call reminder and the like. In some examples, the manned mower 100 may have an automatic driving function, and the current vehicle information may further include one or more of the autonomous driving path planning state, the work site contour information, the relative position of the mower, and the mowing progress.

In this example, the display assembly of the manned mower includes the projection device that can project the current vehicle information in front of the support portion so that when the user is driving the manned mower to operate, the current vehicle information can be projected in front of the user so that the user can view the current vehicle information without lowering the head, thereby improving the safety performance of the manned mower.

In some examples, as shown in FIG. 9, the display assembly 20 further includes the imaging device 22 configured to reflect projection light from the projection device 21 to display the current vehicle information.

The imaging device 22 may include, but is not limited to, organic glass (poly(methyl methacrylate) (PMMA)), polycarbonate (PC) plastic, and the like. The imaging device 22 has a display interface, which may be a display region that can be directly observed by the user. The display interface of the imaging device 22 can at least reflect all projection light projected by the projection device 21 so that through the imaging device 22, the user can acquire all vehicle information that needs to be displayed currently.

In some examples, as shown in FIG. 9, the imaging device 22 is detachably mounted to the manned mower 100 and is located in front of the projection device 21 in the front and rear direction.

Optionally, the imaging device 22 is detachably mounted to the manned mower 100 so that when the user does not need to acquire the current vehicle information through the imaging device 22, the imaging device 22 can be detached from the manned mower 100. Moreover, when the imaging device 22 fails, the imaging device 22 can be directly replaced, which is conducive to reducing maintenance costs. Accordingly, the imaging device 22 is located in front of the projection device 21 in the front and rear direction to reflect projection light from the projection device 21 to the user's eyes so that the user can acquire the current vehicle information.

The imaging device 22 may be directly and detachably mounted to the manned mower 100, and the projection device 21 may also be detachably mounted to the manned mower 100. In addition, the imaging device may also be integrated with the projection device 21 so that the imaging device and the projection device 21 can be integrally mounted to the manned mower 100.

In some examples, the display assembly 20 further includes a mounting base, and the imaging device 22 and the projection device 21 may be integrally mounted to the manned mower via the mounting base. In this case, the imaging device 22 and the projection device 21 are separately connected to the mounting base and mounted to the manned mower 100 via the mounting base, thereby simplifying the manner for mounting the display assembly and reducing the installation costs of the manned mower 100.

In some examples, the imaging device 22 and the projection device 21 are separately mounted to the manned mower 100 so that the imaging device 22 and the projection device 21 can be detached from the manned mower separately. In this manner, when the imaging device or the projection device fails, the imaging device or the projection device can be maintained or replaced separately, thereby reducing the maintenance costs of the manned mower 100.

When the imaging device 22 and the projection device 21 are separately mounted to the manned mower 100, the imaging device 22 may be mounted to the manned mower 100 via a rotary mechanism.

In some examples, the imaging device 22 may be mounted to the manned mower 100 via the projection device 21, and the imaging device 22 may be integrated with the projection device 21 via a rotary mechanism.

In some examples, the imaging device 22 is configured to have at least a first position and a second position.

The included angle formed by the reflective surface of the imaging device 22 at the first position and the up and down direction is different from the included angle formed by the reflective surface of the imaging device 22 at the second position and the up and down direction. For example, the reflective surface of the imaging device 22 at the first position may be parallel to the up and down direction, and a certain included angle is formed between the reflective surface of the imaging device 22 at the second position and the up and down direction. In other examples, the included angle formed by the reflective surface of the imaging device 22 at the first position and the left and right direction is different from the included angle formed by the reflective surface of the imaging device 22 at the second position and the left and right direction.

The imaging device 22 has at least the first position and the second position, that is, the imaging device 22 may have other positions. In some examples, the imaging device 22 may have a third position and/or a fourth position. In some examples, the reflective surface of the imaging device 22 can be continuously rotated to different positions.

In the preceding example, the rotary mechanism is used for driving the imaging device 22 to rotate so that the imaging device 22 has at least the first position and the second position, thereby being adaptable to users of different heights.

In some examples, in the front and rear direction, the distance L between the display center of the imaging device 22 and the support portion 92 is in the range of 0.5 m < L < 1.5 m.

The display interface of the imaging device 22 has a display center. The display center is the center of the display interface. When the user drives the manned mower to perform work, the user sits or stands on the support portion 92, and the distance between the display center of the imaging device 22 and the support portion 92 may be understood as the distance between the display center of the imaging device 22 and the user's eyes.

Optionally, FIG. 10 is a schematic view of a human visual range according to an example of the present application. As shown in FIG. 10, the human visual range is generally centered on the human eye, with an angle of 15° in the up and down direction and an angle of 20° in the left and right direction. The display interface is located within the human visual range. When the distance L between the display center and the support portion 92 is in the range of 0.5 m < L < 1.5 m, the user can clearly observe the content displayed on the display interface. In some examples, the distance L between the display center and the support portion 92 may be 0.6 m. In some examples, the distance L between the display center and the support portion 92 may be 0.7 m. In some examples, the distance L between the display center and the support portion 92 may be 0.8 m. In some examples, the distance L between the display center and the support portion 92 may be 0.9 m. In some examples, the distance L between the display center and the support portion 92 may be 1 m. In some examples, the distance L between the display center and the support portion 92 may be 1.1 m. In some examples, the distance L between the display center and the support portion 92 may be 1.2 m. In some examples, the distance L between the display center and the support portion 92 may be 1.3 m. In some examples, the distance L between the display center and the support portion 92 may be 1.4 m.

In some examples, the current vehicle information includes at least one or more of the current operation state of the manned mower 100, operation state information, the weather forecast, and a fatigue driving reminder.

The current operation state of the manned mower 100 includes at least one or more of the following parameters and screen information: the current traveling speed of the manned mower 100, the on and off states of the power take-off, the parking state, the seat state, the mowing gear, the headlight state, the key switch, the Internet of things state, the cruise control state, the reversing state, the driving gear, the fault information operation mode, the power recovery, the operating power, the battery pack state information, the navigation information, an incoming call reminder, and setting parameters. The operation state information includes at least one or more of the rotational speed of the mowing elements, the mowing gear, the current working area, the current working duration, the traveling path, the cumulative mowing area, and the cumulative operating duration.

If the current vehicle information includes a large amount of content, the display interface of the imaging device 22 displays all the current vehicle information at the same time, causing the display content of the display interface to be too messy, making it difficult for the user to quickly find the required relevant information on the display interface. Therefore, pieces of the current vehicle information may not be displayed at the same time, thereby simplifying the content displayed at each moment on the display interface and making the content displayed on the display interface concise and clear.

In some examples, the current vehicle information includes at least the first display content and the second display content that are displayed alternately. In some examples, the current vehicle information may further include the third display content and/or the fourth display content, and the first display content, the second display content, the third display content, and the fourth display content are displayed alternately. The content of the current vehicle information displayed at each moment may be set according to the amount of the display content included in the current vehicle information, and the number of moments at each of which the current vehicle information is displayed is not limited in this example, as long as the core inventive concept of this example can be achieved. In this example, the first display content and the second display content are displayed alternately so that the content displayed at each moment on the display interface can be simplified, and the content displayed on the display interface can be concise and clear. In this manner, the user can quickly find the required relevant information on the display interface.

In some examples, the manned mower 100 further includes a bus network; the projection device 21 is communicatively connected to the bus network; and the projection device 21 acquires the current vehicle information through the bus network.

Optionally, the projection device 21 can only display the current vehicle information. The current vehicle information to be displayed by the projection device 21 needs to be acquired from the manned mower 100 through a specific communication interface. In some examples, the manned mower 100 includes a bus network, and the projection device 21 includes a controller area network (CAN) transceiver. A communication conversion module is connected to the bus network, acquires the current vehicle information in the bus network, and stores the current vehicle information in the corresponding register. The CAN transceiver is connected to the communication conversion module to read the current vehicle information stored in the corresponding register so that the projection device 21 can project the current vehicle information in front of the support portion 92. In some examples, the manned mower 100 includes a bus network, and the projection device 21 includes a bus transceiver. The bus transceiver is a transceiver that meets the relevant protocols of the manned mower 100 so that the bus transceiver can directly acquire the current vehicle information from the bus network, and the projection device 21 projects the current vehicle information in front of the support portion 92.

In some examples, the manned mower 100 includes a display screen located below the steering operating assembly of the manned mower, and the display screen can directly display the current vehicle information. In this example, the manned mower 100 may include both the display screen and the display assembly 20, and the user may select the manner for viewing the current vehicle information based on driving habits.

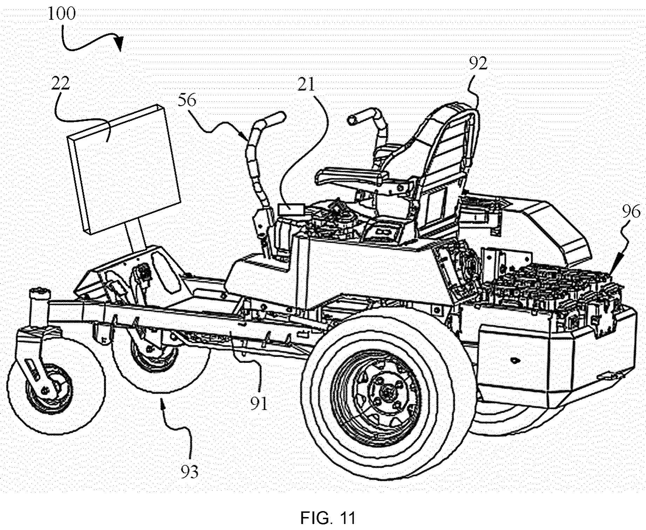

FIG. 11 is a physical view of another manned mower according to an example of the present application. Referring to FIG. 11, the steering operating assembly 56 may further include an operating armrest. The operating armrest is operable by the user to control the traveling direction of the manned mower 100.

In some examples, the manned mower 100 may be a stand-on mower. The support portion may include a standing portion located between two second traveling assemblies 932, and an end of the standing portion facing the first traveling assembly 931 is located between the axis lines of the first traveling assembly 931 and the two second traveling assemblies 932.

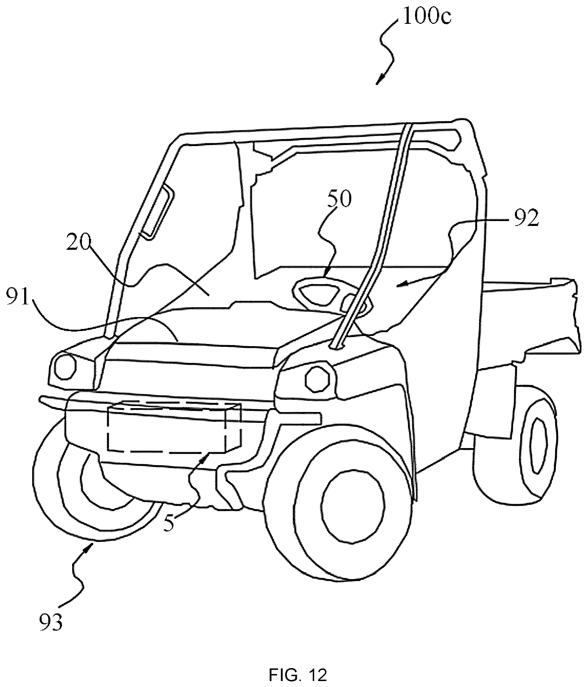

FIG. 12 is a physical view of an ATV according to an example of the present application. Referring to FIG. 12, this example further provides an ATV 100c. The ATV 100c includes a support portion 92, a frame 91, a traveling assembly 93, an operating assembly 50, a power supply assembly 5, and a display assembly 20. The support portion 92 includes a seat for the user to sit on. The frame 91 is used for supporting the seat. The traveling assembly 93 includes traveling wheels for driving the ATV 100c to travel on the ground and a traveling motor for driving the traveling wheels. The operating assembly 50 is operated by the user to control the ATV. The power supply assembly 5 supplies energy to the traveling assembly 93. The display assembly 20 includes a projection device 21. The projection device 21 is used for projecting the current vehicle information in front of the support portion 92.

The projection device 21 may acquire the current vehicle information of the ATV 100c and project the current vehicle information in front of the support portion 92. In some examples, an imaging device 22 for reflecting projection light may be disposed in front of the support portion 92. After the projection device 22 projects the current vehicle information in front of the support portion 92, the imaging device 22 reflects projection light toward the user's eyes so that the user can acquire the current vehicle information. In some examples, the projection device 22 may be a holographic projection device. After the projection device 22 projects the current vehicle information in front of the support portion 92, the user's eyes may directly observe the projected image information.

The current vehicle information may include, but is not limited to, one or more of the real-time traveling speed, the driving gear, the parking state, the reversing state, the state of the support portion, the state of the illumination system, the state of the key, the fault information, the operating mode, the battery level, battery over-temperature, a low battery level alarm, the estimated working duration corresponding to remaining power, setting parameters, and a fatigue driving reminder of the ATV 100c. In some examples, the ATV 100c has an SIM function, and the current vehicle information may further include navigation information, current weather, and future weather. In some examples, the ATV 100c may have a Bluetooth function. When the ATV 100c is connected to Bluetooth, for example, when the manned mower 100 is connected to a communication device such as a mobile phone via Bluetooth, the current vehicle information may further include an incoming call reminder and the like. In some examples, the ATV 100c may have an automatic driving function, and the current vehicle information may further include one or more of the autonomous driving path planning state and the work site contour information.

In some examples, the display assembly 20 further includes the imaging device 22 configured to reflect the projection from the projection device 21 to display the current vehicle information. The imaging device 22 may include, but is not limited to, organic glass (PMMA), PC plastic, and the like. The imaging device 22 has a display interface, which may be a display region that can be directly observed by the user. The display interface of the imaging device 22 can at least reflect all projection light projected by the projection device 21 so that through the imaging device 22, the user can acquire all vehicle information that needs to be displayed currently.

The configurations of the imaging device 22 and the projection device 21 may be similar to those of the imaging device 22 and the projection device 21 in the manned mower 100. For the similarities, reference may be made to the preceding description.

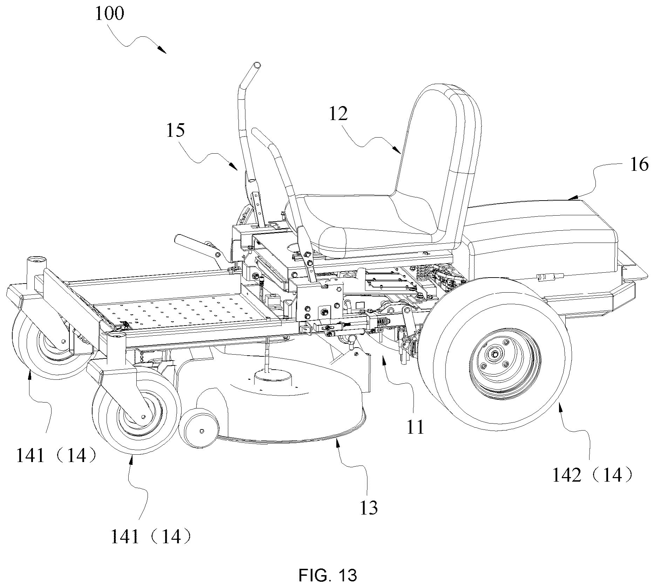

As shown in FIG. 13, this example provides a manned mower 100, and the manned mower 100 includes a frame 11, a traveling assembly 14, a seat 12, a mowing assembly 13, a power supply assembly 16, an operating device 15, and a control device (not shown in the figure). It is to be understood that the term "control device" in the present application may include or relate to software and/or hardware.

As shown in FIG. 13, the frame 11 is supported on the traveling assembly 14, and the traveling assembly 14 is configured to enable the manned mower 100 to travel on the lawn. The traveling assembly 14 includes traveling wheels and traveling motors configured to drive the traveling wheels. The traveling wheels may include first traveling wheels 141 and second traveling wheels 142, and the traveling motors can drive the second traveling wheels 142 to rotate. Two first traveling wheels 141 and two second traveling wheels 142 are provided. Two traveling motors are provided. In this manner, when the two traveling motors drive the corresponding second traveling wheels 142 to rotate at different rotational speeds, a speed difference is generated between the two second traveling wheels 142, thereby causing the manned mower 100 to turn.

The seat 12 is disposed on the frame 11, and the seat 12 is used for the operator to sit on. Of course, in some examples, the manned mower is not provided with the seat, but includes a support portion configured to support the user standing thereon.

The mowing assembly 13 is mounted on the frame 11 and configured to perform a mowing action. The mowing assembly 13 includes mowing elements and mowing motors. The mowing motors can drive the mowing elements to move, thereby implementing a mowing function. In some examples, the mowing assembly 13 includes more than one mowing element. Accordingly, the number of mowing motors corresponds to the number of mowing elements.

The power supply assembly 16 is configured to supply power to the mowing motors, the traveling motors, the control device, and other electronic components on the manned mower 100. In some examples, the power supply assembly 16 is disposed on the rear side of the seat 12. In some examples, the power supply assembly 16 includes multiple battery packs. In some examples, at least one battery pack in the power supply assembly 16 can be detachably mounted to the manned mower. In some examples, the multiple battery packs in the power supply assembly 16 have different capacities or different cell materials. In some examples, at least one of the multiple battery packs in the power supply assembly 16 can supply electrical energy to other power tools.

The operating device 15 is operated by the user to control the manned mower 100 to travel and/or determine whether the manned mower 100 enters a working state. Optionally, the operating device 15 is electrically connected to the control device. Optionally, as shown in FIGS. 13 to 15, the operating device 15 includes a bracket 152, an operating member 151, and a pivot mechanism 153. The bracket 152 is fixedly mounted on the frame 11. The operating member 151 is configured to be movable in a first direction F1 to reach a first position and a second position and to be movable in a second direction F2 to reach a third position and a fourth position. The pivot mechanism 153 is configured to pivotally mount the operating member 151 onto the bracket 152 so that the operating member 151 can switch between the first position, the second position, the third position, or the fourth position.

In some examples, the positions of the operating member 151 in the first direction F1 and the positions of the operating member 151 in the second direction F2 are set by the operator and correspond to the target rotational speeds or target states of the traveling motors and the target state (the working state or the non-working state) of the manned mower 100. The positions in the first direction F1 and the positions in the second direction F2 may include multiple different positions in the directions.

In this example, the positions in the first direction F1 include the first position and the second position. The first position corresponds to the forward state of the manned mower 100, and the second position corresponds to the backward state of the manned mower 100. The positions in the second direction F2 include the third position and the fourth position. The third position corresponds to the working state (that is, the ready state or the zero-speed state) of the manned mower 100, and the fourth position corresponds to the non-working state (that is, the parking state) of the manned mower 100. In this example, the third position is located in the second direction F2 and also located in the first direction F1, and the third position is located between the first position and the second position.

Optionally, when the operating member 151 is at the fourth position in the second direction F2, the manned mower 100 is in the parking state. After the operating member 151 moves from the fourth position to the third position along the second direction F2, the manned mower 100 switches to the zero-speed state. In this case, the operating member 151 is also located in the first direction F1. The operating member 151 provides multiple target travelling speeds in a forward direction between the first position and the third position and provides multiple target travelling speeds in a backward direction between the third position and the second position.

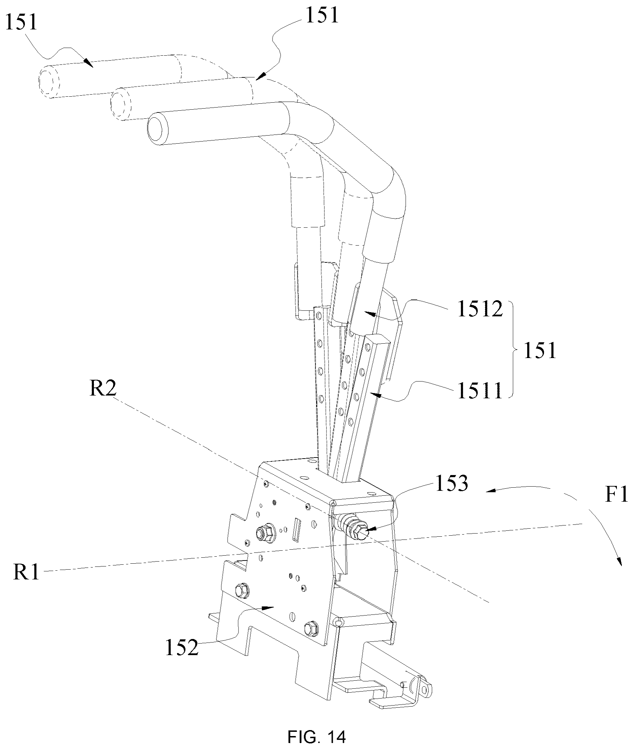

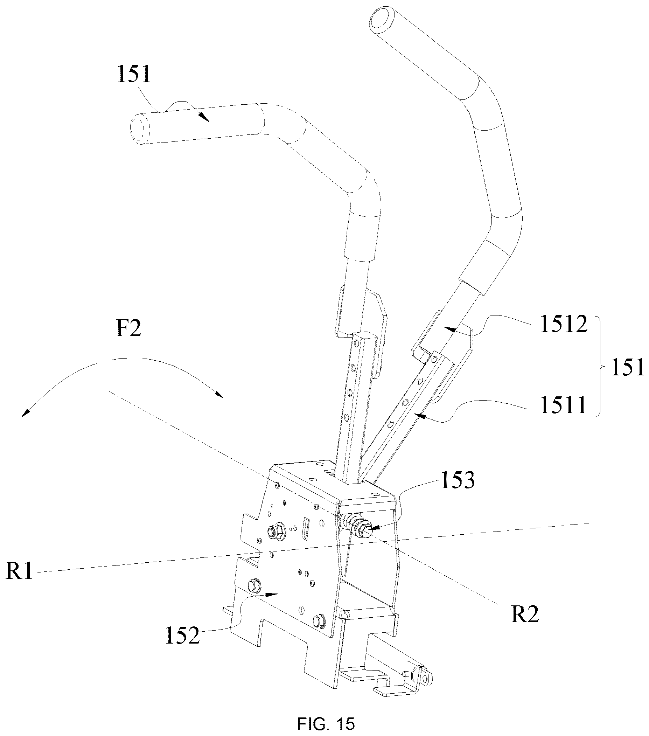

As shown in FIGS. 14 and 15, in this example, the first direction F1 is an arc extending along the front and rear direction. The movement of the operating member 151 in the first direction F1 is actually the rotation about a first axis R1 of the pivot mechanism 153. The second direction F2 is an arc extending in the left and right direction. The movement of the operating member 151 in the second direction F2 is actually the rotation about a second axis R2 of the pivot mechanism 153. In other examples (not shown in the figure), the first direction F1 may be a linear direction. In this example, the movement of the operating member 151 in the first direction F1 is a translation. The second direction F2 may also be a linear direction, and the movement of the operating member 151 in the second direction F2 may also be a translation.

In some examples, as shown in FIGS. 13 and 14, the operating member 151 is a rod, which is convenient for the user to hold. In this example, the operating member 151 includes an operating body 1511 and an extension portion 1512. An end of the operating body 1511 is connected to the pivot mechanism 153, and the extension portion 1512 is connected to the other end of the operating body 1511. By providing the extension portion 1512, the operating member 151 can be extended to a position such that the operating member 151 is convenient for the user to operate, thereby improving the user experience. It is to be understood that the operating member 151 may be constructed as an integrally formed structure. Of course, in other examples, the operating member 151 may be in the form of a toggle button, which is not limited here.

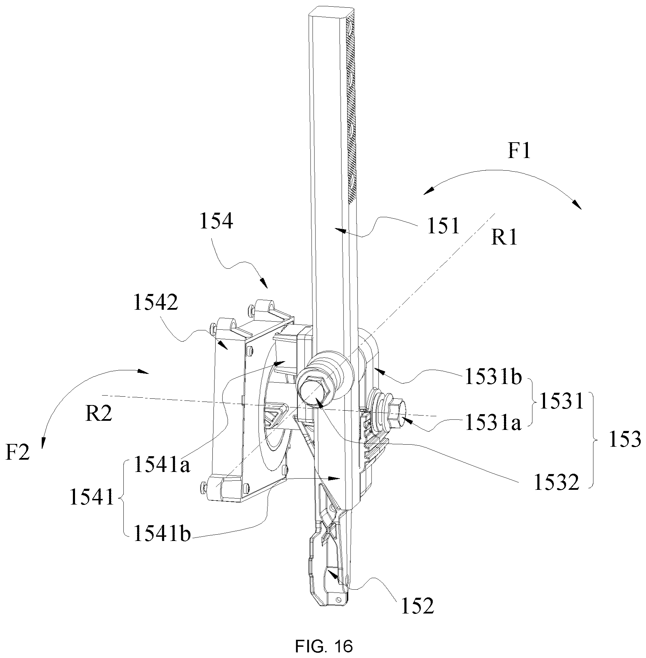

As shown in FIG. 16, the operating device 15 further includes a position detection device 154 configured to detect the position of the operating member 151. In an example, the position detection device 154 includes an induction assembly 1541 and an eddy-current sensor 1542 that are spaced apart. The control device is configured to at least control the operation of the mowing motors or the traveling motors based on the output of the position detection device 154. In this example, in the manned mower 100, different positions of the operating member 151 in two directions can be detected through a set of position detection devices 154. The eddy-current sensor 1542 and the induction assembly 1541 are spaced apart and thus not prone to wear failure, thereby extending the service life of the operating device 15. "Spaced apart" means that the eddy-current sensor 1542 does not need to be in stress contact with the induction assembly 1541.

The working principle of the eddy-current sensor 1542 and the induction assembly 1541 is described below. The eddy-current sensor 1542 includes a transmitting coil and a receiving coil. The transmitting coil can transmit the alternating excitation signal, the alternating excitation signal generates an alternating electromagnetic field in space, and the receiving coil can receive the signal generated by the alternating electromagnetic field. The induction assembly 1541 induces an eddy current under the action of the alternating electromagnetic field, and the eddy current generates the secondary electromagnetic signal field. When the eddy-current sensor 1542 and the induction assembly 1541 move relative to each other, the signal received by the receiving coil of the eddy-current sensor 1542 changes. By demodulating and processing the received signal, the eddy-current sensor 1542 can acquire a relative position between the eddy-current sensor 1542 and the induction assembly 1541, that is, acquire the position of the operating member 151. In this case, the eddy-current sensor 1542 outputs a corresponding signal, and the control device controls the operation of the mowing motors or the traveling motors based on the signal outputted by the eddy-current sensor 1542.

To enable the position detection device 154 to acquire and output the position information of the operating member 151, in an example, as shown in FIG. 16, the induction assembly 1541 is connected to the operating member 151, and the eddy-current sensor 1542 is connected to the bracket 152 or the pivot mechanism 153. That is, when the operating member 151 is operated, the position of the eddy-current sensor 1542 remains fixed, and the induction assembly 1541 moves with the movement of the operating member 151 so that the eddy-current sensor 1542 senses different signals and then distinguishes between the positions of the operating member 151. In other examples, the eddy-current sensor 1542 may be connected to the operating member 151 and move synchronously with the operating member 151, while the induction assembly 1541 is fixed on the bracket 152 or the pivot mechanism 153. In this example, the relative movement between the eddy-current sensor 1542 and the induction assembly 1541 can also be achieved.

As shown in FIG. 16, the pivot mechanism 153 includes a first pivot assembly 1531 and a second pivot assembly 1532. The first pivot assembly 1531 is pivotally mounted on the bracket 152, and the second pivot assembly 1532 is pivotally mounted on the first pivot assembly 1531. The operating member 151 is associated with and connected to the second pivot assembly 1532. The first pivot assembly 1531 is used for allowing the operating member 151 to rotate about the first axis R1 in the first direction F1, and the second pivot assembly 1532 is used for allowing the operating member 151 to rotate about the second axis R2 in the second direction F2. In some examples, as shown in FIG. 16, the first pivot assembly 1531 includes a first pivot shaft 1531a and a support member 1531b. The first pivot shaft 1531a is rotatably supported on the bracket 152. The axis of the first pivot shaft 1531a is the first axis R1. The support member 1531b is fixedly connected to the first pivot shaft 1531a. The second pivot assembly 1532 includes a second pivot shaft, the second pivot shaft is rotatably supported on the support member 1531b, the axis of the second pivot shaft is the second axis R2, and the operating member 151 is connected to the second pivot shaft. When the operating member 151 is driven to move in the first direction F1, the second pivot shaft does not rotate, and the operating member 151, the second pivot shaft, the support member 1531b, and the first pivot shaft 1531a rotate synchronously about the first axis R1, thereby switching between the first position, the third position, and the second position. When the operating member 151 is driven to move in the second direction F2, the position of the first pivot assembly 1531 remains unchanged, and the operating member 151 and the second pivot shaft rotate synchronously about the second axis R2, thereby switching between the third position and the fourth position.

In this example, as shown in FIG. 16, the eddy-current sensor 1542 is fixed to the bracket 152 or the pivot mechanism 153, that is, the position of the eddy-current sensor 1542 remains unchanged, and the induction assembly 1541 is connected to the operating member 151. When the operating member 151 rotates about the first axis R1 in the first direction F1, the induction assembly 1541 rotates relative to the eddy-current sensor 1542, and the eddy-current sensor 1542 senses and outputs different signals separately. As shown in FIGS. 14 and 16, when the operating member 151 is driven to move to the first position, the eddy-current sensor 1542 outputs a first signal, and the control device correspondingly acquires the first signal, which indicates that the traveling motors move forward. When the operating member 151 is driven to the second position, the eddy-current sensor 1542 outputs a second signal, and the control device correspondingly acquires the second signal, which indicates that the traveling motors move backward.

As shown in FIGS. 15, 18, and 19, when the operating member 151 rotates about the second axis R2 in the second direction F2, a specific portion of the induction assembly 1541 approaches or moves away from the eddy-current sensor 1542. When the operating member 151 drives the specific portion of the induction assembly 1541 to move along the second direction F2 to approach the eddy-current sensor 1542, the eddy-current sensor 1542 outputs a third signal, and the control device correspondingly acquires the third signal, which indicates that the manned mower 100 is in the zero-speed state. Since the third position is also located in the first direction F1, when the operating member 151 moves from the first position to the third position or from the second position to the third position along the first direction F1, the eddy-current sensor 1542 also outputs the third signal. When the operating member 151 drives the specific portion of the induction assembly 1541 to move along the second direction F2 to move away from the eddy-current sensor 1542, the eddy-current sensor 1542 outputs a fourth signal, and the control device correspondingly acquires the fourth signal, which indicates that the manned mower 100 is in the parking state.

In other examples, the induction assembly 1541 may be fixed to the bracket 152 or the pivot mechanism 153, and the eddy-current sensor 1542 may be connected to the operating member 151. In this example, when the operating member 151 rotates about the first axis R1 in the first direction F1, the eddy-current sensor 1542 rotates relative to the induction assembly 1541. The eddy-current sensor 1542 outputs the first signal and the second signal at the first position and the second position, respectively, and the control device correspondingly acquires the first signal and the second signal. In the case where the operating member 151 rotates about the second axis R2 in the second direction F2, when the operating member 151 is located at the third position, the eddy-current sensor 1542 is adjacent to the specific portion of the induction assembly 1541, the induction assembly 1541 outputs the third signal, and the control device correspondingly acquires the third signal; when the operating member 151 is located at the fourth position, the eddy-current sensor 1542 is farther from the specific portion of the induction assembly 1541, the induction assembly 1541 outputs the fourth signal, and the control device correspondingly acquires the fourth signal.

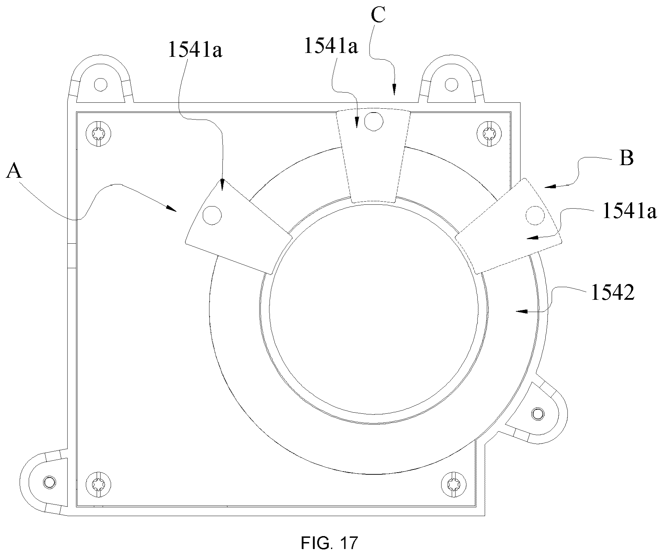

As shown in FIG. 16, when the operating member 151 moves in the first direction F1, the eddy-current sensor 1542 and the induction assembly 1541 are in an adjacent state. In this adjacent state, as shown in FIG. 17, the induction assembly 1541 can rotate about the first axis R1 and can move to position A and position B relative to the eddy-current sensor 1542. Optionally, when the operating member 151 is located at the first position, the induction assembly 1541 is located at position A relative to the eddy-current sensor 1542; and when the operating member 151 is located at the second position, the induction assembly 1541 is located at position B relative to the eddy-current sensor 1542. In some examples, the third position of the operating member 151 is also located in the first direction F1. Therefore, in the preceding adjacent state, the induction assembly 1541 can also move about the first axis R1 to position C relative to the eddy-current sensor 1542. Position C is located between position A and position B. When the operating member 151 is located at the third position, the induction assembly 1541 is located at position C relative to the eddy-current sensor 1542.

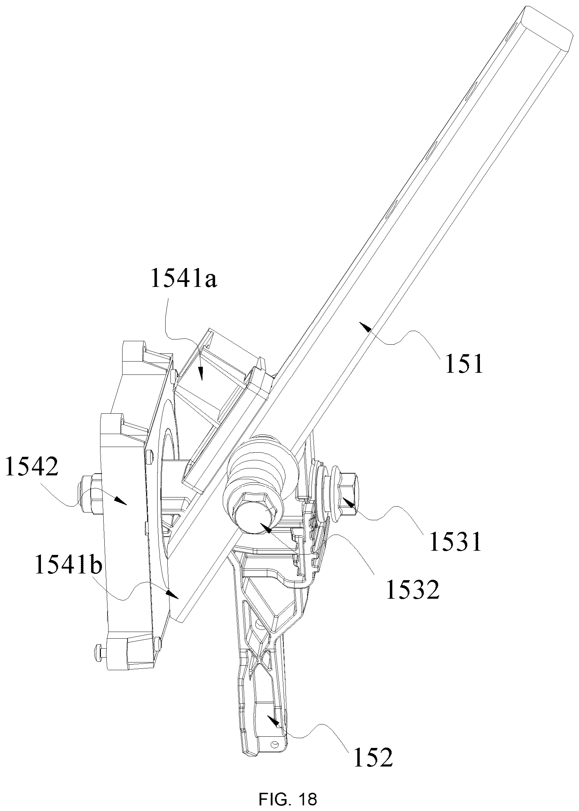

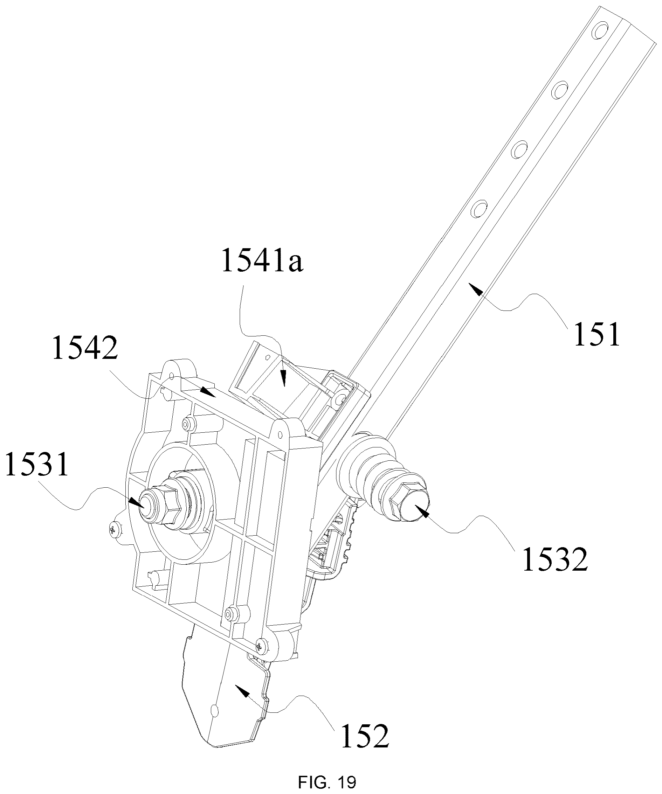

As shown in FIGS. 18 and 19, when the operating member 151 is at the fourth position, the eddy-current sensor 1542 and the induction assembly 1541 are in a state of being far apart. In the state of being far apart, the control device acquires the fourth signal based on the position detection device 154.

As shown in FIG. 16, the induction assembly 1541 includes a first induction end 1541a and a second induction end 1541b. The first induction end 1541a is used for triggering the eddy-current sensor 1542 to identify various positions of the operating member 151 in the first direction F1, and the second induction end 1541b is used for triggering the eddy-current sensor 1542 to identify various positions of the operating member 151 in the second direction F2. By setting two induction ends to separately trigger the eddy-current sensor 1542 to identify the positions of the operating member 151 in different directions, the eddy-current sensor 1542 can sense clearly distinguishable signals, thereby reducing the difficulty of subsequent demodulation and processing. Optionally, the first induction end 1541a and the second induction end 1541b are both connected to the operating member 151. As shown in FIG. 16, when the induction assembly 1541 and the eddy-current sensor 1542 are in the adjacent state, the first induction end 1541a is closer to the eddy-current sensor 1542, and the second induction end 1541b is farther from the eddy-current sensor 1542. As shown in FIG. 18, when the induction assembly 1541 and the eddy-current sensor 1542 are in the state of being far apart, the first induction end 1541a is farther from the eddy-current sensor 1542, and the second induction end 1541b is closer to the eddy-current sensor 1542.

The specific portion of the induction assembly 1541 is the second induction end 1541b.

As shown in FIG. 16, when the first induction end 1541a is located within the effective identification range of the eddy-current sensor 1542, the second induction end 1541b is farther from the eddy-current sensor 1542, thereby preventing the secondary electromagnetic signal field generated by the second induction end 1541b from interfering with the eddy-current sensor 1542 in identifying the secondary electromagnetic signal field generated by the first induction end 1541a. In this manner, the identification difficulty of the eddy-current sensor 1542 can be reduced, and the identification accuracy of the eddy-current sensor 1542 can be improved. In this example, when the eddy-current sensor 1542 and the induction assembly 1541 are in the adjacent state, the first induction end 1541a is located within the effective identification range of the eddy-current sensor 1542, and the second induction end 1541b is farther from the eddy-current sensor 1542.

As shown in FIG. 18, when the operating member 151 is located at the fourth position, the first induction end 1541a is located outside the effective identification range of the eddy-current sensor 1542. In this manner, the secondary electromagnetic signal field generated by the first induction end 1541a can be prevented from interfering with the eddy-current sensor 1542 in identifying the secondary electromagnetic signal field generated by the second induction end 1541b so that the identification difficulty of the eddy-current sensor 1542 can be reduced, and the identification accuracy of the eddy-current sensor 1542 can be improved. In this example, when the eddy-current sensor 1542 and the induction assembly 1541 are in the state of being far apart, the first induction end 1541a is located outside the effective identification range of the eddy-current sensor 1542.

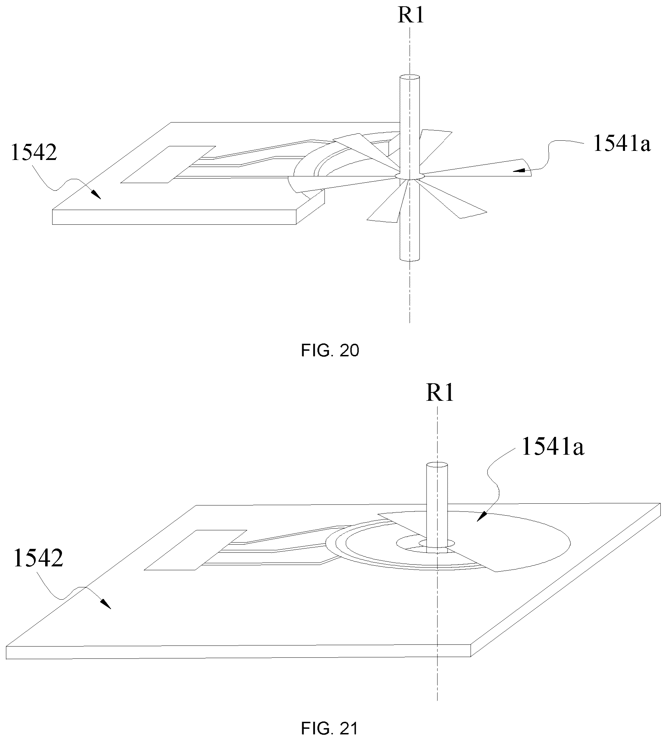

In some examples, the induction assembly 1541 includes only the first induction end 1541a, and the first induction end 1541a is used for triggering the eddy-current sensor 1542 to identify various positions of the operating member 151 in the first direction F1 or the second direction F2. The induction assembly 1541 acquires the position change of the operating member 151 in the first direction by receiving the change in the angle signal of the first induction end 1541a. The induction assembly 1541 acquires the position change of the operating member 151 in the second direction by receiving the change in the strength of the signal of the first induction end 1541a. Optionally, the first induction end 1541a may be constructed as a fan-shaped structure as shown in FIG. 17. In some examples, as shown in FIG. 20, first induction ends 1541a are constructed as multiple sectors uniformly distributed circumferentially about the first axis R1. In some examples, as shown in FIG. 21, the first induction end 1541a is constructed as a semicircular structure.

In some examples, the position detection device 154 includes only the eddy-current sensor 1542, and the operating member 151 includes a sensing portion configured to trigger the eddy-current sensor 1542 to identify various positions of the operating member 151 in the first direction F1 or the second direction F2. In this example, the operating member 151 and the sensing portion are integrally formed, thereby reducing the number of components of the manned mower and lowering the manufacturing costs.

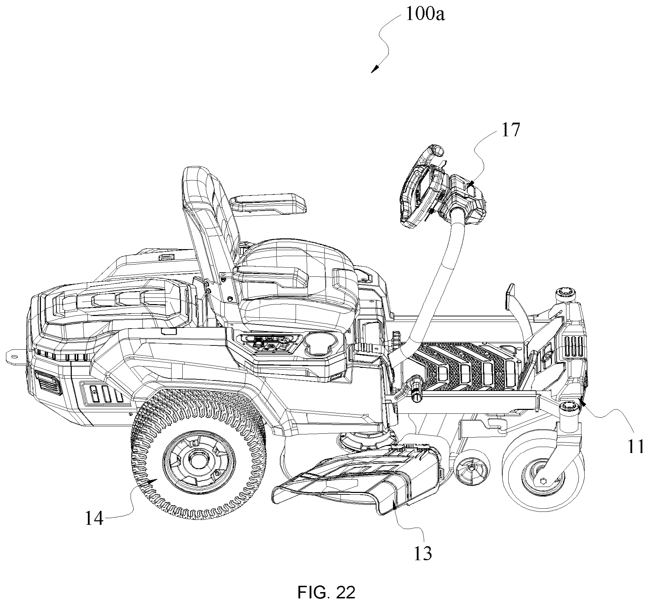

In some examples, the operating device 15 including the eddy-current sensor 1542 and the induction assembly 1541 can also be applied to an electronic steering wheel 17 of a manned mower 100a as shown in FIG. 22, and the operating device 15 is configured to detect the rotational position of the electronic steering wheel 17.

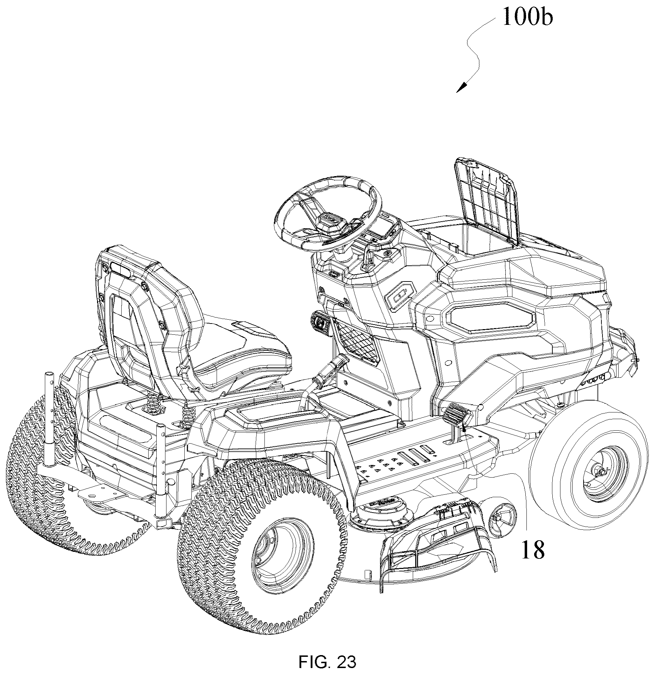

In some examples, the operating device 15 including the eddy-current sensor 1542 and the induction assembly 1541 can also be applied to an electronic throttle 18 of a lawn tractor 100b as shown in FIG. 23, and the operating device 15 is further configured to detect the position of the electronic throttle 18.

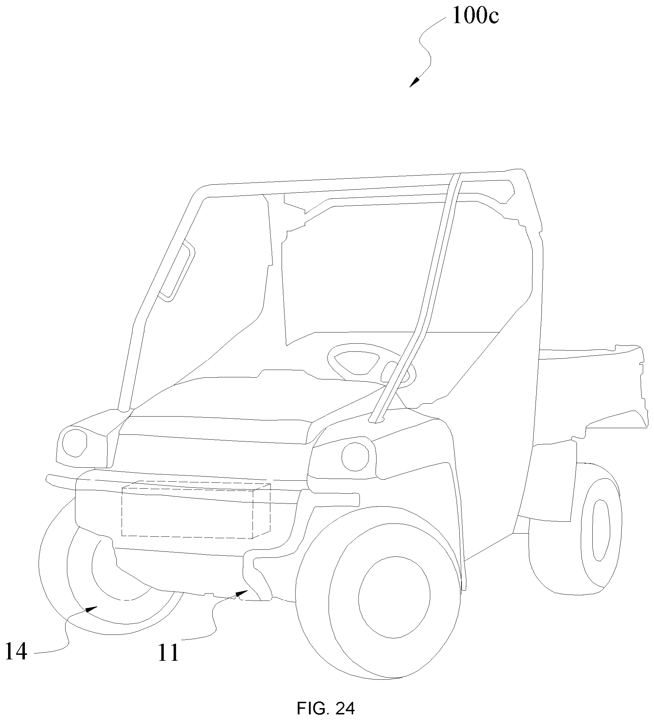

In some examples, the operating device may be applied to the electronic throttle and/or electronic steering wheel of the ATV 100c as shown in FIG. 24 and configured to detect the positions of the electronic throttle and the electronic steering wheel. In the related art, the ATV includes a four-wheel ATV, a UTV, and a go-kart.

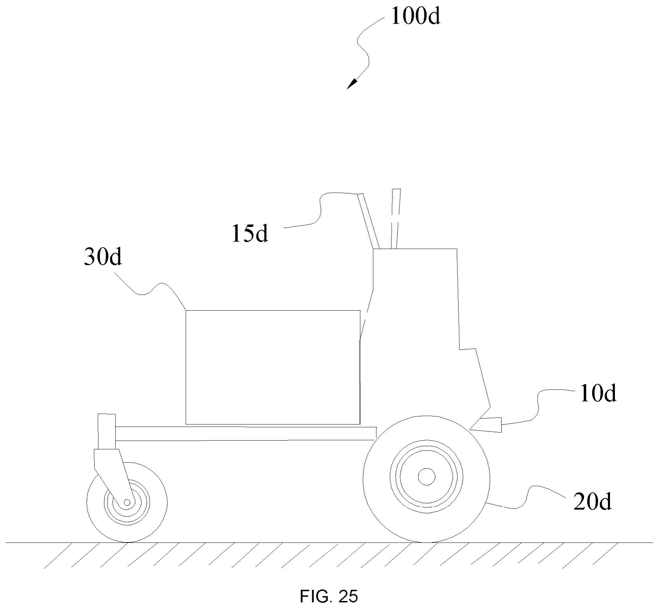

In some examples, the preceding technical solution for detecting the position of an operating device 15d may also be applied to a stand-on mower 100d as shown in FIG. 25. Optionally, the stand-on mower 100d has a support portion 10d for supporting the user to stand thereon, traveling wheels 20d for supporting the stand-on mower 100d to travel on the ground, and a traveling motor (not shown in the figure) for driving the traveling wheels 20d. The stand-on mower 100d further includes an energy storage device 30d configured to drive at least the traveling motor. In some examples, the energy storage device includes at least one battery pack. In some examples, a detection device 15d is configured to be operated by the user to control the traveling direction of the stand-on mower, for example, going straight, turning left, or turning right. In some examples, a detection device 15d is configured to be operated by the user to control the operation state of the traveling motor or mowing motors of the stand-on mower. In some examples, a detection device 15d is configured to be operated by the user to control the activation and deactivation of the parking function of the stand-on mower.

This example further provides a manned mower 100, which has the same structure as the manned mower 100 described above. The position detection device 154 of the manned mower 100 includes a signal transceiver element and an induction assembly 1541. The signal transceiver element can transmit an alternating excitation signal and generate an alternating electromagnetic signal field. The induction assembly 1541 can respond to the alternating electromagnetic signal field and generate a secondary electromagnetic signal field. The signal transceiver element can respond to the secondary electromagnetic signal field and output a signal corresponding to the current position of the operating member 151. The control device is at least configured to control the operation of the mowing motors or the traveling motor based on the output of the signal transceiver element.

In some examples (not shown in the figure), the pivot mechanism 153 may be a ball joint structure. Optionally, the ball joint structure includes a fixed portion and a ball portion. A spherical space is formed in the fixed portion, the ball portion is connected to the operating member 151, and the ball portion can rotate in the spherical space. A part of the position detection device is connected to the fixed portion, and the other part of the position detection device is mounted to the ball portion. The operating member can drive the ball portion to move to the first position and the second position, and the operating member can also drive the ball portion to move to the third position and the fourth position. The control device determines the current position of the operating member based on the output of the position detection device.

In some examples, the position detection device includes a magnetoresistive sensor and an induction coil, the magnetoresistive sensor is spaced apart from a magnetic element, and the induction coil and the magnetoresistive sensor are separately associated with and connected to the pivot mechanism so that when the operating member moves in the first direction and the second direction, the operating member drives the magnetoresistive sensor and the induction coil to move relative to each other, thereby detecting the position of the operating member. The working principle of the magnetoresistive sensor and the induction coil is described below. The magnetoresistive sensor generates a magnetic field, the induction coil generates a secondary magnetic field based on electromagnetic induction, and the magnetoresistive sensor can identify the secondary magnetic field. When the relative position between the induction coil and the magnetoresistive sensor is changed, the magnetoresistive sensor identifies the change in the secondary magnetic field, thereby identifying the position change of the operating member.

In some examples, the position detection device includes a magnetic angle sensor and a magnet, the magnetic angle sensor is fixedly connected to the bracket, the magnet and the magnetic angle sensor are opposite to each other, and the magnet is connected to the operating member and can move synchronously with the operating member. When the operating member moves in the first direction, the magnetic angle sensor directly detects the angle of the magnet and then acquires the position of the operating member in the first direction. When the operating member moves in the second direction to cause the magnet to move away from the magnetic angle sensor, the magnetic angle sensor cannot identify the magnet, thereby identifying the fourth position.

In some examples, the position detection device includes an inductive analog sensor, the inductive analog sensor is fixed on the bracket, and the operating member is at least partially made of metal material. The working principle of the inductive analog sensor is described below. When a metal object approaches the inductive analog sensor, the oscillator energy of the inductive analog sensor decreases, and the decrease degree is related to the distance. The signal whose energy decreases is processed and then an electrical signal that is linearly related to the distance is outputted. Therefore, by detecting the distance between the operating member and the inductive analog sensor, the position of the operating member in the first direction can be obtained. For example, the range of the inductive analog sensor is 0 to 255. When the operating member is at the third position, it is set to 100, with the minimum value being 10 and the maximum value being 200. When the operating member is at the fourth position in the second direction, the inductive analog sensor cannot detect the operating member, thereby identifying that the operating member is at the fourth position.

In some examples, the position detection device includes a two-axis pressure strain gauge and a detection assembly. The two-axis pressure strain gauge can detect the changes in pressure strain signals in two mutually perpendicular axes. The two-axis pressure strain gauge is adhered to the operating member and connected to the detection assembly. During the movement of the operating member, the operating member drives the detection assembly to deform, thereby converting the changes in the angle and force of the operating member on the first axis and the second axis into the changes in the resistance of the two-axis pressure strain gauge. The detection process is roughly described below. The operating member moves in the first direction, the resistance on the first axis of the two-axis pressure strain gauge changes, and the corresponding position of the operating member in the first direction is obtained through the resistance change. The operating member moves in the second direction, the resistance on the second axis of the two-axis pressure strain gauge changes, and the corresponding position of the operating member in the second direction is obtained through the resistance change.

In some examples, the position detection device includes two tension sensors and two elastic members. A first elastic member is connected between the operating member and the bracket. When the operating member moves in the first direction, the first elastic member can be stretched or compressed. A first tension sensor determines the position of the operating member in the first direction by detecting the force-bearing state of the first elastic member. A second elastic member is connected between the operating member and the bracket. When the operating member moves in the second direction, the second elastic member can be stretched or compressed. A second tension sensor determines the position of the operating member in the second direction by detecting the force-bearing state of the second elastic member.

In some examples, the position detection device includes an angle ruler. Optionally, the angle ruler includes a high-speed rotating electric motor, with several detection points arranged around the periphery of the electric motor. During the rotation of the electric motor, when the electric motor passes the first detection point, the timing starts; when the electric motor reaches the second detection point, the time is recorded again; and when the electric motor rotates to the first detection point again, the timing is stopped. In this manner, the duration during which the electric motor rotates from the first detection point to the second detection point and the duration during which the electric motor rotates from the first detection point and returns to the first detection point again are obtained, thereby obtaining the angle between the first detection point and the second detection point. In this example, the first detection point is connected to the frame, and the second detection point is fixed to the operating member and can move with the operating member, thereby obtaining the angle change of the operating member relative to the vehicle body, that is, the position change of the operating member in the first direction. In addition, the angle ruler further includes a third detection point associated with and connected to the operating member, and when the operating member moves in the second direction, the operating member drives the third detection point to move. When the operating member moves to the fourth position in the second direction, the operating member drives the third detection point to move so that the position of the third detection point cannot be obtained in normal detection, and only the first detection point and the second detection point can be detected, thereby determining whether the operating member is at the third position or the fourth position.

In some examples, the position detection device includes a photoelectric encoder, and the photoelectric encoder is an absolute encoder. The absolute photoelectric encoder includes a photoelectric assembly and an encoding disk. The working principle of the absolute photoelectric encoder is described below. The operating member can drive the encoding disk to rotate, and the photoelectric assembly can detect the specific code during the rotation of the encoding disk, thereby acquiring the position information of the operating member. Optionally, the photoelectric assembly is connected to the bracket, the encoding disk is connected to the first pivot shaft, and when the operating member rotates about the first axis in the first direction, the photoelectric assembly indirectly acquires the position of the operating member in the first direction by detecting the code of the encoding disk. When the operating member moves from the third position to the fourth position in the second direction, the encoding disk moves relative to the photoelectric assembly so that the photoelectric assembly cannot detect the corresponding encoding output, thereby obtaining the position change of the operating member in the second direction (that is, the change of the operating member between the third position and the fourth position).

In some examples, the position detection device includes a magnetic encoder and a magnet. The working principle of the magnetic encoder and the magnet is described below. The magnetic encoder detects the rotation of the magnetic poles of the magnet and records the number of rotations, and the position information of the operating member is obtained through the relationship between the number of rotations and the angle of rotation of the magnet. Optionally, the magnetic encoder is fixed to the bracket, the magnet is fixed to the first pivot shaft, and the magnetic encoder and the magnet are opposite to each other. During the rotation of the operating member and the first pivot shaft about the first axis, the magnetic encoder records the number of rotations of the magnetic poles of the magnet, thereby obtaining the angle of rotation of the magnet and further obtaining the angle of rotation of the operating member in the first direction (that is, the position of the operating member in the first direction). When the operating member moves to the fourth position in the second direction, the magnetic encoder cannot detect the state of the magnet, thereby identifying that the operating member is at the fourth position.

In some examples, the position detection device includes two absolute encoders, and the working principle of the absolute encoders is to directly output the current absolute position data through binary encoding. In this example, one of the absolute encoders is connected to the first pivot shaft and used for outputting the position information of the operating member in the first direction. The other one of the absolute encoders is connected to the second pivot shaft and used for outputting the position information of the operating member in the second direction.

In some examples, the position detection device includes an encoder with a switch. The encoder with a switch includes a body, a rotary shaft rotatable relative to the body, and a switch connected to the body. The body is fixed to the bracket, and the rotary shaft is connected to the first pivot shaft. When the operating member and the first pivot shaft rotate about the first axis, the body acquires the angle of rotation of the first pivot shaft through the relationship between the rotation of the rotary shaft and the angle value and then acquires the position of the operating member in the first direction. When the operating member moves in the second direction, the switch is triggered to be turned on or off so that the encoder with a switch can identify the third position and the fourth position.

In some examples, the position detection device includes a linear array charge-coupled device (CCD) sensor and an encoded detection target, the linear array CCD sensor can detect image changes of 1*n pixels, and the encoded detection target is associated with and connected to the operating member. When the operating member moves, the operating member drives the detection target to rotate, and the CCD sensor detects the corresponding image changes, thereby obtaining the position changes of the operating member. When the operating member moves in the first direction and the second direction, a difference exists between the detected target images so that the positions of the operating member in the two directions can be detected separately.

In some examples, the position detection device includes a photocell, a light source, and a light shield. The working principle is described below. The light source generates a stable linear laser that irradiates the photocell, and the voltage of the photocell changes as the irradiation region of the laser changes. Optionally, the photocell and the light source are both connected to the bracket, the relative position between the photocell and the light source is fixed, and the light shield is connected to the operating member and can move in the first direction along with the operating member. When the operating member moves in the first direction, the light shield changes the shielding state for the light source, and the voltage of the photocell changes accordingly, thereby identifying the position of the operating member in the first direction. When the operating member moves to the third position, the light shield also has a shielding state for the light source, so the photocell has a corresponding voltage. When the operating member moves to the fourth position in the second direction, the light shield no longer shields the light source, and the laser is completely irradiated onto the photocell, thereby detecting the third position and the fourth position.

In some examples, the position detection device includes a capacitor. The most basic capacitor includes two plates. When the distance between the two plates or the effective area of the two plates is changed, the capacitance of the capacitor is changed. In this example, the capacitor includes three plates, where the first plate is fixedly connected to the bracket, and the second plate and the third plate are associated with and connected to the operating member separately. When the operating member moves in the first direction, the effective area of the first plate and the second plate is changed. In this case, the position of the operating member in the first direction can be obtained by detecting the capacitance of the capacitor. When the operating member moves in the second direction, the operating member drives the third plate to move relative to the first plate so that the capacitance of the capacitor between the third plate and the first plate is changed, thereby achieving the position detection of the operating member in the second direction.

In some examples, the position detection device includes two rotary potentiometers. The rotary potentiometer includes a potentiometer body and a rotary shaft. As the rotary shaft rotates relative to the potentiometer body, the resistance of the potentiometer is changed. In this example, the potentiometer body of the first rotary potentiometer is connected to the bracket, and the rotary shaft of the first rotary potentiometer is connected to the first pivot shaft. When the operating member rotates about the first axis in the first direction, the operating member drives the rotary shaft to rotate relative to the corresponding potentiometer body, and the resistance of the rotary potentiometer corresponds to the position of the operating member in the first direction. In this example, the potentiometer body of the second rotary potentiometer is connected to the bracket, and the rotary shaft of the second rotary potentiometer is connected to the second pivot shaft. When the operating member rotates about the second axis in the second direction, the operating member drives the rotary shaft to rotate relative to the corresponding potentiometer body, and the resistance of the second rotary potentiometer corresponds to the position of the operating member in the second direction.

In some examples, the position detection device includes two displacement sensors, the two displacement sensors detect the displacement change of the operating member in the first direction and the position change of the operating member in the second direction, respectively, thereby obtaining the position of the operating member in the first direction and the position of the operating member in the second direction, respectively.

In some examples, the position detection device includes a rotary potentiometer with a switch, and the rotary potentiometer with a switch includes a potentiometer body, a rotary shaft, and a switch. When in use, the potentiometer body is fixedly connected to the bracket, and the rotary shaft is connected to the first pivot shaft. When the operating member rotates about the first axis in the first direction, the rotary shaft rotates relative to the potentiometer body, and the resistance of the potentiometer body corresponds to the position of the operating member in the first direction (including the first position, the second position, and the third position). When the operating member moves to the fourth position in the second direction, the operating member triggers the switch and turns off the rotary potentiometer, thereby identifying the fourth position.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. An electric mowing vehicle, comprising:
a frame;
a mowing assembly connected to the frame;
a traveling assembly connected to the frame and comprising at least traveling wheels;
a traveling motor configured to at least drive the traveling wheels to rotate;
a power supply device configured to supply power to at least the traveling motor; and
a human-computer interaction device configured to display vehicle information or receive information inputted by a user;
wherein the human-computer interaction device further comprises:
a display panel with a touch function, wherein the display panel is capable of displaying at least a first display page or a second display page;
wherein the display panel is configured to be capable of switching between the first display page and the second display page when receiving a fingerprint touch switching instruction from the user.

2. The electric mowing vehicle of claim 1, wherein the first display page is configured to display current state information of the electric mowing vehicle.

3. The electric mowing vehicle of claim 2, wherein the current state information comprises a state of the power supply device, an illumination system, a Bluetooth indication, an operation indication, a rotational speed of a mowing element, and a rotational speed of the traveling wheels; and the state of the power supply device, the rotational speed of the mowing element, and the rotational speed of the traveling wheels are configured to be displayed in a middle region of the first display page.

4. The electric mowing vehicle of claim 1, wherein the second display page is configured to display cumulative information of the electric mowing vehicle.

5. The electric mowing vehicle of claim 4, wherein the cumulative information comprises at least one of a total working duration, a total mowing area, and a remaining battery life.

6. The electric mowing vehicle of claim 1, wherein the display panel is further capable of displaying a third display page, and the third display page is configured to display detailed information of the power supply device.

7. The electric mowing vehicle of claim 6, wherein the power supply device comprises a plurality of battery packs, and the detailed information comprises states of the plurality of battery packs, such as states of charge or total capacities of the plurality of battery packs.

8. The electric mowing vehicle of claim 6, wherein the display panel is configured to be capable of switching between the first display page and the third display page when receiving the fingerprint touch switching instruction from the user.

9. The electric mowing vehicle of claim 1, wherein the human-computer interaction device further has an information change setting function, and a display page is operable by the user to switch to an information change setting mode.

10. The electric mowing vehicle of claim 9, wherein the display panel displays a corresponding function in the information change mode, acquires an operation instruction from the user for the corresponding function, and performs a corresponding information change operation according to the operation instruction.

11. The electric mowing vehicle of claim 1, wherein the touch function of the display panel has an on state and an off state.

12. The electric mowing vehicle of claim 11, wherein when the touch function of the display panel is in the on state, the display panel displays a corresponding function, acquires an operation instruction from the user for the corresponding function, and performs a corresponding operation according to the operation instruction.

13. The electric mowing vehicle of claim 12, wherein the operation instruction comprises sliding, clicking, or key input.

14. The electric mowing vehicle of claim 11, wherein the touch function of the display panel is configured to switch between the on state and the off state by acquiring an operation instruction from the user on the display panel.

15. The electric mowing vehicle of claim 1, wherein the display panel is a dot matrix screen.

16. An all-terrain vehicle (ATV), comprising:
a frame;
a seat disposed on the frame and comprising at least a driver's seat;
an operation and control device configured to control operation of the ATV;
a traveling assembly connected to the frame and comprising at least traveling wheels;
a traveling motor configured to at least drive the traveling wheels to rotate;
a power supply device configured to supply power to at least the traveling motor; and
a human-computer interaction device configured to display vehicle information or receive information inputted by a user;
wherein the human-computer interaction device further comprises a display panel with a touch function, wherein the display panel is capable of displaying at least a first display page or a second display page; and
the display panel is configured to be capable of switching between the first display page and the second display page when receiving a fingerprint touch switching instruction from the user.

17. The ATV of claim 16, wherein the ATV is configured to be capable of attaching a variety of working attachments, and the variety of working attachments comprise at least a mowing assembly, a snow removal assembly, or a trailer hitch.
